(19) Europäisches Patentamt / European Patent Office / Office européen des brevets

(11) **EP 3 048 563 A1**

(12) **EUROPEAN PATENT APPLICATION**

(43) Date of publication:
**27.07.2016 Bulletin 2016/30**

(51) Int Cl.:
***G06K 9/62*** (2006.01)

(21) Application number: **15305063.8**

(22) Date of filing: **22.01.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Aerts, Maarten
2018 Antwerp (BE)**
• **Macq, Jean-François
2018 Antwerp (BE)**

(74) Representative: **D'Halleweyn, Nele Veerle Trees
Gertrudis et al
Arnold & Siedsma
Bezuidenhoutseweg 57
2594 AC The Hague (NL)**

(54) **Method and system for incremental manifold learning**

(57) A method for incremental manifold learning, comprising: incrementally obtaining a plurality of appearance samples; for each incrementally obtained appearance sample, determining an initial embedding in a manifold, said embedding being a lower-dimensional representation of said incrementally obtained appearance sample; for each last incrementally obtained appearance sample, selecting a proper subset from said incrementally obtained appearance samples, said proper subset comprising at least said last appearance sample and its predecessor appearance sample; computing for that proper subset a transport operator relation between said last appearance sample and its predecessor appearance sample and zero or more auxiliary transport operator relations between respective pairs of appearance samples of said proper subset; iteratively updating said manifold based on said computed transport operator relations.

FIG. 1

EP 3 048 563 A1

**Description**

Field of the Invention

The field of the invention relates to incremental manifold learning. Particular embodiments relate to a system, method and computer program product for incremental manifold learning.

Background

Manifold learning (a.k.a. embedding, model training, dimensionality reduction) aims to transform a high-dimensional data set into a low-dimensional space, meanwhile retaining (most of) the underlying structure in the data, e.g. in order to avoid the 'curse of dimensionality', since many classifiers experience difficulty in a high-dimensional space given insufficient training samples.

Many manifold learning algorithms demand a lot of computing power. A disadvantage is that they typically operate in batch mode, i.e. they process large blocks of data samples at once. The algorithms cannot reuse information from an earlier run and have to recommence the entire computation from the beginning, even for the slightest change in a data set. While this is feasible for the offline analysis of recorded data sets, it is undesirable for time critical analysis when operating in an online mode. In order to make manifold learning suitable for more demanding applications, where new data are arriving at a high rate, an incremental formulation of the algorithms is required.

Known incremental manifold learning techniques have been developed to use absolute data, and are therefore not or badly applicable in online settings, wherein new samples are obtained incrementally while an optical flow manifold, for e.g. video coding, must be built.

Summary

It is an object of embodiments of the present invention to allow manifold learning in an online setting using relative data. Other objects of embodiments of the present invention are to allow video coding and transmission using appearance models learnt in that manner.

According to a first aspect of the invention, there is provided a method for incremental manifold learning, comprising: incrementally obtaining a plurality of appearance samples, preferably three or more appearance samples; for each incrementally obtained appearance sample, determining an initial embedding in a manifold, said embedding being a lower-dimensional representation of said incrementally obtained appearance sample; for each last incrementally obtained appearance sample, selecting a proper subset from said incrementally obtained appearance samples, said proper subset comprising at least said last appearance sample and its predecessor appearance sample; and computing for that proper subset a transport operator, preferably an optical transport operator, relation between said last appearance sample and its predecessor appearance sample and zero or more auxiliary transport operator relations between respective pairs of appearance samples of said proper subset.

In this manner, a limited set of measurement is chosen only for computing transport operator relations, which allows to use the method embodiment in an online setting using relative data.

The skilled person will understand that a set A is a proper subset of a set B if A is a subset of B but A is not equal to B. In other words, there exists at least one element of B which is not an element of A. The empty set { }, denoted by ø, is also a subset of any given set X. It is also always a proper subset of any set except itself.

The skilled person will understand that an 'appearance sample' can be taken to mean an image (e.g. from a video), or more generally a unit of data that can be mapped on a grid, preferably a two-dimensional grid. Nevertheless, embodiments of the method according to the present invention may also find application for other model learning techniques.

In an embodiment, said method comprises: iteratively determining whether or not to generate at least one new neighbourhood of said manifold, depending on modelling consistency requirements, wherein each neighbourhood defines a consistently modelled sub-region of said manifold; and determining a number of memberships for each incrementally obtained appearance sample, by allocating said appearance sample as an embedding to a number of neighbourhoods of said manifold; and wherein said iterative updating of said manifold is performed on a per-neighbourhood basis. Said iterative updating is performed by: estimating local behaviour in a neighbourhood of said manifold based on transport operator relations between appearance samples allocated to said neighbourhood; and aligning said embeddings in said neighbourhood based on said estimated local behaviour.

In this manner, using multiple neighbourhoods allows to better capture the complex nature of the manifold, and allows efficient learning on a per-neighbourhood basis, such that the method embodiment is well suited to use in an online setting.

In an embodiment, said updating is performed asynchronously from said incremental obtaining.

In an embodiment, said determining whether or not to generate at least one new neighbourhood is performed asynchronously from said incremental obtaining.

In an embodiment, each neighbourhood comprises a group of consecutively obtained appearance samples. Computing a transport operator relation comprises propagating a set of video particles over consecutive appearance samples of said neighbourhood. At least one appearance sample of each neighbourhood is a member of a plurality of neighbourhoods. Estimating local behaviour in a neighbourhood is preferably based on a pre-computed kernel matrix containing correlations based on said set of video particles for said neighbourhood. Said zero or more auxiliary transport operator relations are computed between respective pairs of appearance samples associated with embeddings in order to reduce drift over one or more neighbourhoods of said manifold. Said method optionally also comprises storing an index of computed auxiliary transport operator relations in order to prevent re-computation thereof.

The skilled person will understand that 'a set of video particles' should be taken to refer to a sparse set of traceable feature points in a video.

In an embodiment, said method comprises: detecting for a neighbourhood whether or not an occlusion has occurred; and closing said neighbourhood for further allocating based on said detecting.

The skilled person is aware of techniques for detecting occlusion of video particle propagation tracks.

In an embodiment, said method comprises, after updating a neighbourhood of said manifold: determining a probabilistic framework configured for correcting said aligned embeddings based on an aggregating probability matrix based on said pre-computed kernel matrix; and correcting said aligned embeddings based on said information filter. Said method optionally comprises, after said correcting: regularizing said iteratively updated manifold neighbourhood by normalizing and orthogonalizing its eigenvectors.

In this manner, measurements with different accuracy can be aggregated.

In a further developed embodiment, said probabilistic framework is a Kalman or Kalman-like information filter.

In a further developed embodiment, updating a manifold on a per-neighbourhood basis comprises: modelling said manifold by determining a number of derivatives for each respective neighbourhood based on appearance sample members of said respective neighbourhood and their computed operator transport relations, in order to provide a first information filter for aggregating partial information about said number of derivatives of said respective neighbourhood, said partial information being provided by said computed operator transport relations. Said method also comprises updating said manifold on a per-sample basis by embedding new appearance samples in said manifold by determining new embeddings based on said number of derivatives and said transport operator relations, in order to provide a second information filter for aggregating partial information about said embeddings, said partial information being provided by the neighbourhoods of which said sample is a member.

In a further developed embodiment, computing said transport operator relation comprises computing a first flow map from a first appearance sample to a second appearance sample, said first flow map being registered to said first appearance sample's framework. Said updating of said manifold neighbourhood comprises: warping said first flow map to a third appearance sample's framework, based on a second flow map from said first appearance sample to said third appearance sample, wherein said second flow map is estimated based on one or more derivatives previously determined for the neighbourhood of said third appearance sample. Said method optionally comprises, after said updating: regularizing said iteratively updated manifold neighbourhood by orthogonalizing its derivatives.

In a further developed embodiment, said method comprises relaxing said information filter in order to at least partially include a number of derivatives determined for at least one previous updating of said manifold.

In this manner, the convergence of the manifold learning can be improved.

In an embodiment, computing said zero or more auxiliary transport operator relations comprises: calculating a Euclidean distance between said respective pairs of appearance samples of said proper subset in said manifold space; calculating a shortest path over the graph of said appearance samples; comparing said Euclidean distance and said shortest path; based on said comparing, determining a number of pairs of appearance samples of said proper subset; and computing for said determined number of pairs of appearance samples zero or more auxiliary transport operator relations. Additionally or alternatively, said number of memberships is determined based on respective (preferably Euclidean) distances in said manifold space between said embedding and said neighbourhood's centre, after each iteration of said updating of said manifold neighbourhood. Additionally or alternatively, said method comprises determining whether or not to generate and/or terminate a number of neighbourhoods (i.e. at least one of generating a number of neighbourhoods and terminating a number of neighbourhoods, preferably different neighbourhoods) based on the respective (preferably Euclidean) distances between extant neighbourhoods of said manifold, and on respective distances between pairs of embeddings in said extant neighbourhoods.

In a further developed embodiment, said number of pairs of appearance samples of said proper subset is determined by selecting those pairs of appearance samples whose ratio of shortest path over Euclidean distance exceeds a pre-determined threshold.

In an embodiment, said method comprises: interpolating an appearance sample based on a reduced version of said manifold; obtaining user input in a visual domain based on said interpolated appearance sample; translating said user input to said manifold space; predicting a required manifold point based on said translated user input and on a predetermined story script defining a trace through said manifold space; estimating coverage of said manifold by determining region sizes of interpolation regions for a plurality of embeddings in said manifold space; comparing said estimated coverage and said predicted required manifold point; based on said comparing, determining a number of appearance samples to be obtained; and adding said number of appearance samples to said reduced version of said manifold.

In a further developed embodiment, said method comprises obtaining and adding a number of embeddings corresponding with said determined number of appearance samples to be obtained from said manifold to said reduced version of said manifold.

According to another aspect of the invention, there is provided a system for incremental manifold learning, comprising: a sample input module configured for incrementally obtaining a plurality of appearance samples, preferably three or more appearance samples, and for determining, for each incrementally obtained appearance sample, an initial embedding in a manifold, said embedding being a lower-dimensional representation of said incrementally obtained appearance sample; a link decision module configured for selecting, for each last incrementally obtained appearance sample, a proper subset from said incrementally obtained appearance samples, said proper subset comprising at least said last appearance sample and its predecessor appearance sample; a transport operator module configured for computing for that proper subset a transport operator relation between said last appearance sample and its predecessor appearance sample and zero or more auxiliary transport operator relations between respective pairs of appearance samples of said proper subset; and a learning module configured for iteratively updating said manifold based on said computed transport operator relations.

The skilled person will understand that the hereinabove described considerations, features and advantages also apply for embodiments of the system, mutatis mutandis.

In an embodiment, said system comprises: a neighbourhood generation module configured for iteratively determining for each incrementally obtained appearance sample whether or not to generate at least one new neighbourhood of said manifold, depending on modelling consistency requirements, wherein each neighbourhood defines a consistently modelled sub-region of said manifold; and a membership module configured for determining a number of memberships for each incrementally obtained appearance sample, by allocating said appearance sample as an embedding to a number of neighbourhoods of said manifold. Said learning module is configured for iteratively updating said manifold on a per-neighbourhood basis by: estimating local behaviour in a neighbourhood of said manifold based on transport operator relations between appearance samples allocated to said neighbourhood; and aligning said embeddings in said neighbourhood based on said estimated local behaviour.

In an embodiment, said neighbourhood generation module is configured for generating each neighbourhood such that it comprises a group of consecutive appearance samples. Said transport operator module is configured for propagating a set of video particles over consecutive samples of said neighbourhood; for computing said zero or more auxiliary transport operator relations in order to reduce drift over one or more neighbourhoods of said manifold; and optionally for storing an index of computed auxiliary transport operator relations in order to prevent re-computation thereof. Said learning module is preferably configured for estimating local behaviour in a neighbourhood based on a pre-computed kernel matrix containing correlations based on said set of video particles for said neighbourhood. Said membership module is configured for allocating at least one appearance sample of each neighbourhood as a member of a plurality of neighbourhoods.

In an embodiment, said learning module is configured for updating a manifold on a per-neighbourhood basis by: modelling said manifold by determining a number of derivatives for each respective neighbourhood based on appearance sample members of said respective neighbourhood and their computed operator transport relations, in order to provide a first information filter for aggregating partial information about said number of derivatives of said respective neighbourhood, said partial information being provided by said computed operator transport relations. Said learning module is also configured for updating said manifold on a per-sample basis by: embedding new appearance samples in said manifold by determining new embeddings based on said number of derivatives and said transport operator relations, in order to provide a second information filter for aggregating partial information about said embeddings, said partial information being provided by the neighbourhoods of which said ample is a member.

According to another aspect of the invention, there is provided a computer program product comprising computer-executable instructions for performing a method when the program is run on a computer, the method comprising the steps of any one of the methods described hereinabove.

The skilled person will understand that the hereinabove described considerations and advantages also apply for embodiments of the computer program product, mutatis mutandis. The computer program product can be any of the following: a computer readable storage medium storing said computer-executable instructions, a telecommunication signal constituting said computer-executable instructions, a data carrier carrying a computer program of said computer-executable instruction, a computer program of said computer-executable instructions stored in an internal memory of a computer, or another computer program product than those listed.

Brief Description of the Figures

The accompanying drawings are used to illustrate presently preferred non-limiting exemplary embodiments according to the present invention. The above and other advantages of the features of embodiments according to the invention and objects of the invention will become more apparent and the invention will be better understood from the following detailed description when read in conjunction with the accompanying drawings, in which:

Figure 1 illustrates schematically an embodiment of a system according to the present invention;
Figure 2 illustrates schematically an example of particle set propagation in an embodiment of a method according to the present invention;
Figure 3 illustrates schematically a learning module for an embodiment of a system according to the present invention;
Figure 4 illustrates schematically another learning module for an embodiment of a system according to the present invention;
Figure 5 illustrates schematically an example of warping a relation $F_{ab}$ to a framework of a neighbourhood C in an embodiment of a method according to the present invention;
Figure 6 illustrates schematically an example setting for an embodiment of a method according to the present invention;
Figure 7 illustrates schematically an example embodiment of a system according to the present invention;
Figure 8 illustrates schematically interpolation and the dual translation when using a model that includes a representation of derivatives, in an embodiment of a method according to the present invention;
Figure 9 illustrates schematically interpolation from a representation with a number of particle sets per sample, in an embodiment of a method according to the invention;
Figure 10 illustrates schematically an example coverage estimation setting for an embodiment of a method according to the invention; and
Figure 11 illustrates schematically the example setting of Figure 10 after resampling using MCMC.

Description of Embodiments

Video representation formats have mainly been driven by the urge to reduce bandwidth. How to get as many data through with the least amount of bytes? One specific anecdote at the very beginning of MPEG (Motion Pictures Expert Group) illustrates this. The first encoder was interested in finding out where every macroblock of the previous frame went in the current frame. Soon that changed into finding which block in the previous frame was the most similar to the macroblock in the current frame. A very subtle change technically, but a big difference in mind-set. The community is no longer interested in the most meaningful predictor, but rather one that produces the smallest residual.

That research decision might have to be reconsidered. Video isn't that fixed sequence of frames of pixels produced once and consumed 'as is' many times anymore. It is desirable to personalize it, interact with it, manipulate it, etc. Therefore, the representation format used for video data should care less about how much bandwidth it's spending and more about representing what is actually going on in the content. By rethinking the research question, it is possible to achieve lower bandwidth anyway, even down to near-zero bandwidth, because of the increased extrapolation qualities of semantically meaningful representations.

The holy grail then becomes, of course, the question whether the encoder can just semantically describe what's happening in the video and let the decoder re-render the described scene? That still appears too ambitious. However, the aim is modelling the data, predicting from it and finding a right balance between feasibility and representation power. In the classical MPEG family of encoders, the previous I-frame is the model. The motion vectors it uses for prediction for instance, don't prove to be the optimal representation for understanding which object moves where. Hence, they also don't extrapolate in the future. At the other end of the spectrum, there is computer generated content from meshes and textures, etc. That is a representation that fully enables manipulation of the content and telling a story from just a few parameters. Nevertheless, representing an arbitrary video by this format does not yet appear feasible.

Once sufficient models for the objects in the video have been built, only a few parameters are relied on for describing the current scene. Moreover, these parameters are semantically more meaningful than motion vectors and do inter/extrapolate well over short time intervals. This allows to approach zero-bandwidth transmission of video.

Thus, a first technical question balances in between the extremes of current coding schemes and CGI (Computer Generated Images): how to find a video representation format by looking for more meaningful models and predictors, such that content can be rendered from these models using a few parameters, allowing near-zero bandwidth transmission of streaming video, and enabling easy video manipulation?

In computer vision, appearance models are a way to capture an object's different appearances under various conditions. This model can be used for tracking, object detection, image classification and other machine learning problems. The appearance model comprises a dictionary of many possible renderings of an object in different poses, different lighting conditions, different deformations, etc. Such a database of examples differs from approaches that use a parametric rendering model, like rigged meshes for representation of 3D objects or parameterized texture generators for iterative parts of an image like sea waves, grass or foliage. An appearance model encodes a new image from a dictionary of examples and interpolation coefficients

Appearance models make sense because the appearances of objects are limited, often defining its identity. For instance, a face has eyes above a nose on top of a mouth. A different configuration would not be a face. Because the appearances occupy only a subspace, they can be captured in a model. However, this subspace is continuous and dictionaries cannot comprise all possible appearances. They will form a discretized version of it, a set of samples of appearances. These samples may be combined to interpolate the full continuous appearance subspace. Because interpolation techniques are limited (sometimes only linear combinations are used), the more samples are used the more accurate a representation is possible.

Because the number of samples is exponential with the degrees of freedom of the object (the samples lie in the product space thereof), special care needs to be taken to choosing what defines good objects for appearance models. A human may have too many degrees of freedom (arms, legs, fingers, face expression, etc.) to capture every possible combination of poses. It may be desirable to split up the object in multiple parts. A more elegant way is to build a hierarchy of coarser sampled dictionaries for the whole of the object and finer sampling of the different subparts. This way, the sampling density may be more balanced without the exponential increase of storage (and transmission) size. The same is true for a generic-to-specific hierarchy (e.g. coarse sampling for any face, finer for male/female, even finer for a specific person).

Recently, appearance models have been used to improve coding of videos. Such algorithms do not only scope the traditional P-frames for predicting the next, but build a dictionary for a specific object over the full length of the video. All samples in the dictionary may be used for prediction. If the size of the dictionary can be kept smaller than the size of the I-frames in MPEG-coding, appearance based coding has an advantage over it. This is the case for videos with high self-similarity over longer periods than the GOP-size.

Using appearance models as a representation format meets the requirements set out above, in particular for online streaming video. The encoder builds its models online and incrementally, without the luxury of buffering a large chunk of samples (frames or segmented parts of frames) first to process at once, and with real-time constraints on the processing time. Either the same model is built by the decoder or the model is transmitted when bandwidth is available, but once good models for the objects are learned, rendering of the content needs only a few parameters.

Known techniques for building appearance models cannot simply be implemented for an online learning use case. They require batch access to data instead of incremental access. On top of that, they will require too much computational cost, making it infeasible to run in real-time.

Thus, a second question is: can an appearance model be learned incrementally, with limited computational resources and memory?

A known technique uses Active Appearance Models (AAM) to represent the deformations of the face of a user in a video communication context. This is used as error concealment for bridging packet losses.

The face is represented as an appearance (the texture of the face that is put on a mesh) and a set of sparse, pre-defined manually annotated control points (the geometry that defines that mesh). The model comprises the mean appearance and shape, as well as possible variations of it, meaning the covariation of appearance and control points. The technique uses PCA (Principal Component Analysis) to define the principal variation axes. This way, the model defines how the appearance of a face may and may not change during a sequence of frames by varying the PCA parameters.

It is to be understood that for AAM's, the control points are predefined and, at least for the first training images, are manually annotated. Also, each AAM model is a single entity, without relations between different models, since the technique is concerned with variations from a single mean.

Another known technique focuses on the shortcomings of Image Articulation Manifolds as described above, to indicate that Optical Flow-based approaches allow more smooth manifolds and thus a theoretically more sound foundation to start modelling objects. However, the technique does not consider AAMs. Image Articulation Manifolds are manifolds (i.e. low-dimensional degrees of freedom embedded within a high-dimensional space), only capturing the appearance of an object without modelling motion.

Where AAMs stick to PCA on their predefined sparse feature-based geometries, this technique extends to other dimensionality reduction algorithms (LLE, Isomap, etc.) based on dense flow maps. Flow maps from one central appearance to many other neighbouring instances define the local behaviour of the model around that central appearance. The technique further considers the possibility of choosing an optimal set of key appearances (a.k.a. charting), from which the whole object can be modelled.

However, the technique is not applicable in an online setting with incrementally obtained samples, since it relies on all data being available at the start of the model learning algorithm and on unlimited computational power to evaluate any optical flow map between neighbours.

Rather than learning manifolds from absolute data, which can be extracted directly from each frame, it is desirable to use relative data (or, in other words, relational information), since a single linear projection like PCA does not suffice to capture the more complex non-linear structure of a manifold. Embodiments of the present invention therefore make use of relative data to learn the models, using transport operators between incrementally obtained samples (i.e. an incoming stream of packets).

Putting this in an online setting requires the following considerations.

Firstly, there are N*(N-1) possible relations between N appearance samples. It is computationally unfeasible to address them all. Therefore, it is necessary to select carefully which relations to compute and which not. Known techniques require unlimited access to all of the possible relations. Computationally, this is unaffordable in an online setting: only a subset of the relations can be computed. It is an object of embodiments of the present invention to define a feasible strategy that runs in real-time.

Secondly, using only relative offsets between samples, no absolute measures. This complicates the embedding algorithm.

Suppose there is a video with a circular recurring motion (like someone riding a bike), i.e. like an object traverses several iterations through a loop of states. It can be expected that subsequent samples are embedded into a similar circular structure. That would be so if there were a fully connected graph of samples. However, if there are only relative measurements between each pair of consecutive samples or frames, there is no relation explicitly trying to force a closed loop. So the embedding might look more like an open curve or even a spiral. When using relative measures, such as an optical transport operator, there may be drift, ending up with a small discrepancy between each iteration.

A reason why known OFM (Optical Flow-based Manifolds) based techniques don't apply to streaming video in a straightforward manner is because they assume that relational information (in this case optical flow maps) between any pair of appearance samples is available at request. However, computing such info is computationally expensive and storing the results requires quite some space. It is advantageous to take good care about the choice of pairs for which to compute that information. It is important to realize that when you know the relation between A and B and B and C, you don't necessarily know the relation between A and C. Flow maps don't propagate well in that manner. Therefore, embodiments of the present invention contemplate a strategy that uses a minimal amount of relations between samples to train the manifold. Preferably, new relations are created at a constant rate; typically there will be time for only a few flow maps per new sample or frame. At the same time, it is desirable to have maximal connectivity between the samples to have good learning capabilities.

Some nomenclature will now be proposed. There is a high-dimensional input space of appearance samples. The relations $F_{ij}$ between two appearance samples $X_i$ and $X_j$ are defined in this space. It is quite a dense space, with a dimensionality in the order of the number of pixels. It could be proposed to subsample to already reduce complexity to some degree, but it will still be large. On the other hand, each appearance sample $X_i$ is also embedded as embedding $Y_i$ on the low-dimensional manifold. The heterogeneous manifold cannot be modelled as a whole. The whole of the model will therefore be split into multiple approximately homogeneous neighbourhoods $R_k$ of appearance samples. One such neighbourhood can be described by a single model that is approximately consistent throughout all member samples. In other words, one neighbourhood defines a simple consistent (e.g. linear) sub-region within the complex (e.g. non-linear) manifold. These neighbourhoods may overlap. Appearance samples can be allocated to (i.e. be members of, denoted by a membership matrix $M_{ik}$) multiple neighbourhoods at once. In the embedding space the samples $Y_i$ and the relations $F_{ij}$ between them constitute a graph.

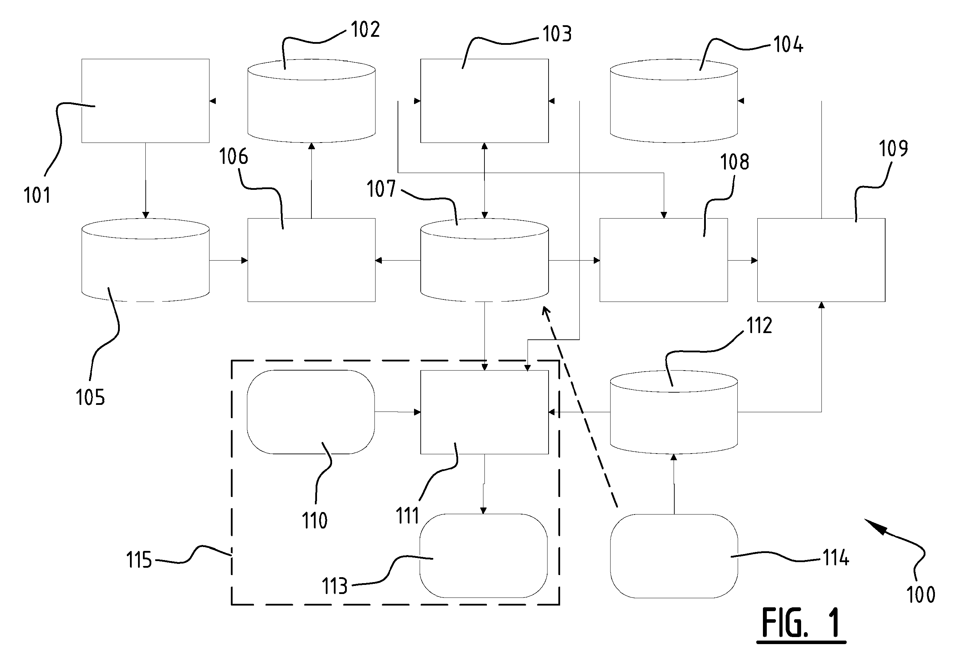

Figure 1 illustrates schematically an embodiment of a system according to the present invention. In Figure 1, 100 indicates a system for incremental manifold learning, 101 is a neighbourhood generation module, 102 are allocated (preferably weighted) memberships, 103 is a learning module, 104 are relations, 105 are neighbourhoods, 106 is a membership module, 107 are embeddings (i.e. a manifold), 108 is a link decision module, 109 is a transport operator (here: optical transport operator) module, 110 is a request input, 111 is an interpolation module, 112 are (appearance) samples, 113 is an (appearance) sample output, 114 is an (appearance) sample input and 115 indicates an output-interpolator that is functionally separate from the system 100.

In a first embodiment, the system according to the present invention comprises a sample input module 114, a link decision module 108, a transport operator module 109, and a learning module 103. In a second embodiment, the system according to the present invention comprises a neighbourhood generation module 101 and a membership module 105, as well as a specifically configured learning module 103.

Some embodiments of a system according to the present invention comprise a neighbourhood generation module that defines when and where there is a need of a new consistent region $R_k$ on the manifold. There is a membership module that defines which samples are members of which neighbourhood and to what extent. The value of this extent may be captured in a matrix of weights $M_{ik}$ (a sample can be loosely linked to a neighbourhood or be linked very closely). Vice versa, this module may also define which neighbourhoods influence an appearance sample and to what extent. Neighbourhoods and memberships may be fixed, but may also be dynamic. It is an insight of the inventors that using a single neighbourhood doesn't capture the complex nature of the manifold. Moreover, having multiple neighbourhoods facilitates incremental learning, as will become clear later-on.

Some embodiments of a system according to the present invention comprise an (optical) transport operator module, that may be configured to take in two samples $X_i$ and $X_j$ and output dense relative measures $F_{ij}$ like an (optical) flow map.

Some embodiments of a system according to the present invention comprise a link decision module configured for requesting appropriate pairs where needed, based on the neighbourhoods and memberships.

Embodiments of a system according to the present invention comprise a learning module. For every neighbourhood $R_k$ it may be configured to learn a locally consistent part of the model and update the embeddings $Y_i$ accordingly. The learning module may be an iterative module. Moreover, it may update the embeddings $Y_i$ asynchronously of the incoming measurements. The consistent part of the model may be made explicit or is kept implicit within the learning algorithm.

Some embodiments of a system according to the present invention comprise an interpolation module, which may be configured for generating new content X' from the model at a required embedding Y'.

When a new sample arrives, it is added to the set of appearance samples $X_i$. Also, a new corresponding embedding $Y_i$ is initialized. The membership module will register it under some neighbouring regions $R_k$. The link decision module will notice that this new sample has no relations to other samples, so it will schedule a new request with the optical transport operator, linking the new sample to another neighbouring one $X_j$. The new relation $F_{ij}$ is then added to the set of all relations and used by the learning module to update all embeddings. The learning module updates on a per neighbourhood basis. All samples with membership $M_{ik}$ of a neighbourhood are used to estimate the local behaviour of the model and their embeddings $Y_i$ are aligned accordingly. When there is a void in the embedding space where many samples lack tight membership to a neighbourhood, a new neighbourhood $R_k$ might be generated. The same way, neighbourhoods with few members may be terminated to release resources.

The update iteration may be considered a power iteration solving a least-squares system of equations, as will be described below.

Some embodiments of a system according to the present invention allow incremental manifold learning, and may foreseeably be incorporated into an encoder or a decoder or a video manipulation application. Moreover, some embodiments of a system according to the present invention contemplate taking abstraction from the form in which the input arrives. Preferred suggestions may be that each object or even object's part initiates a different model; hence a video frame would be segmented first and the different segments could be sent to different manifold learning instances. This is orthogonal to learning the manifold.

An embodiment of the system uses fixed membership of neighbourhoods. Neighbourhoods may (conveniently) be defined as 'groups of consecutive samples or frames'. Neighbourhoods may overlap. Instead of using flow maps directly, the embodiments use flow maps between consecutive samples or frames to propagate a set of video particles. This set is sparser than a full optical flow map, but more dense than the control points of AAM. An advantage is that these particles can be propagated for a long period, while optical flow maps cannot. This means that, per neighbourhood, a full clique may be created of maximal connectivity between the samples because the particles' positions are known at each sample, although there is only a linear string of computed flow maps. At a certain point, the particles don't propagate well any further, because of occlusions and/or accumulated error. Then, the neighbourhood may be closed and resources released to create new neighbourhoods.

Another advantage is that, for manifold learning purposes, in many cases there is no need to keep the whole set of relations $F_{ij}$. Depending on the learning technique that is used, it suffices to keep a kernel matrix of correlations (sized the square of the number of samples in the neighbourhood). Since neighbourhoods are fixed, each new measurement will just append a row and a column to this kernel matrix, keeping all other values untouched. This is a computationally very advantageous.

The neighbourhood generation module is responsible for the decision when to start a new clique of particles. For this purpose, one could analyse the particle tracks and check for occlusion (convergence). When the number of particles that got occluded outweighs the benefit of continuing this set, the neighbourhood is terminated and a new one is started with initial particles spread over the full sample on a dense grid. An alternative, easier implementation would be to start a new clique at a regular interval, e.g. every 20 samples or frames.

The membership module is responsible for allocating appearance samples. Each sample is a member of a neighbourhood that started at a time instance before the sample's timestamp and hasn't been terminated at that point. This means that when resources allow for e.g. 4 particles sets to be alive at the same time, each sample will be a member of 4 neighbourhoods. Each neighbourhood would then have a 75% overlap with the next one. Membership can be binary, but it is preferred to make it weighted. Every member is assigned a weight inversely proportional to the distance of the centre of the neighbourhood, e.g. by using a radial basis function.

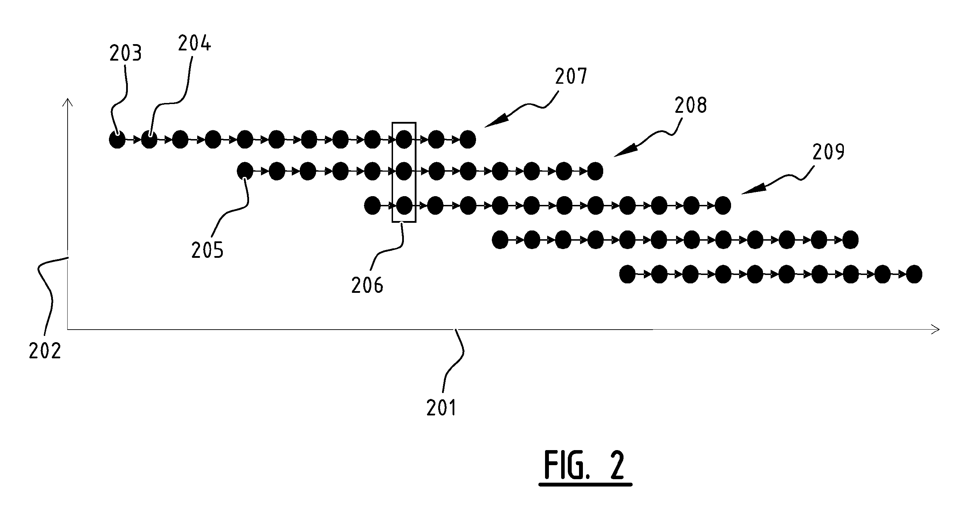

Figure 2 illustrates schematically an example of particle set propagation in an embodiment of a method according to the present invention. Axis 201 represents (appearance) samples, axis 202 represents neighbourhoods, 203-205 are (appearance) samples that have been obtained - samples 203 and 204 are immediately consecutive, such that when sample 204 has last been obtained, sample 203 is its predecessor sample, 206 is a group of three neighbourhoods indicating memberships for a sample, and 207-209 are three different neighbourhoods. It can be seen that neighbourhoods overlap (in this case for 2/3) by using multiple simultaneously alive particle sets (in this case 3).

The overlap is required to already reduce drift. If there would be no overlap (so each sample is member of a single neighbourhood), the embeddings of the samples of each neighbourhood would be independent and can easily drift, since there is no mechanism to tie them together. However, overlap is not sufficient. Auxiliary relations may be added between samples as well.

The link decision module is configured to decide to at least compute flows between every pair of consecutive samples or frames and propagate the particles for each clique that the new sample is a member of. In addition, to avoid drift since there are only relative measures (see description above about 'closing the loop'), the module may be configured to decide to request auxiliary relations between samples with very close embeddings $Y_i$ and $Y_j$, but that aren't members of the same neighbourhood. Also, the module may be configured to keep track of its own decisions, so it doesn't create redundant relations. Since such relations require computation of a new optical flow and particle propagation, they are costly and should be chosen carefully. Typically at most one auxiliary relation is added each sample or frame. This happens when the object that is being modelled return to a similar state (pose, expression, ...) after a significant amount of time.

As mentioned, the optical transport operator is similar to Particle Videos described in the literature. Since several particle sets are run at the same time, it would be advantageous to compute optical flow once per sample or frame and then propagate all particle sets accordingly. An even more light-weight alternative is the KLT tracker. Each neighbourhood corresponds to one particle set. It is initialized with a regular grid over the entire appearance sample. Each sample that is a member of the neighbourhood will have new locations for all particles in the set, according to the observed motion of the modelled object. The particle tracks can be regarded as the 2D projections of fixed points on the object over time.

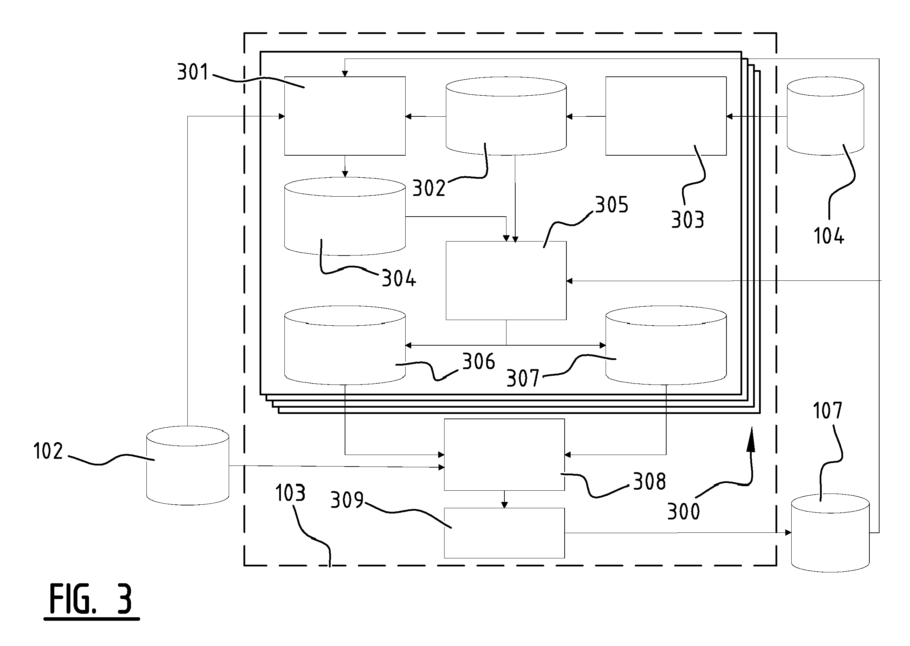

Figure 3 illustrates schematically a learning module 103 for an embodiment of a system according to the present invention. In Figure 3, 301 is a modelling module, 302 is a number of kernels, 303 is a kernel update module, 104 are relations, 304 are combination weights, 305 is a power iteration module, 306 is an information vector module, 307 is a probability matrix, 102 are memberships, 308 is an information filter aggregation module, 309 is a regularization module, 107 are embeddings, and 300 indicates operation on a per-neighbourhood basis (e.g. one kernel per neighbourhood).

The learning module may be configured in multiple ways. As mentioned, it benefits from the kernel trick. Instead of doing large computations on the whole particle track set $F_{ij}$, some correlations $K_{ij}$ are pre-computed and learning is done as a function of this new smaller matrix. An overview of some possible techniques and the corresponding kernels follows.

A first technique can be called LSQ1, for Least Squares First Order. Each neighbourhood defines a linear derivative of the particle locations with respect to the embedding dimensions. Updating means estimating those derivatives from the current embeddings and relations and then estimating new embeddings based on the relations and the derivatives. Mathematically, the matrix Y is denoted as the embeddings of all samples which are a member to the neighbourhood and F is the matrix composed of particle set locations for each member. The matrices Y and F are centred around the origin by subtracting the sample mean. Calling U the matrix of derivatives of F to Y gives:

$$F = Y.U$$

Estimating the derivative U of the neighbourhood from F and the current Y yields:

$$U = (Y^T.Y)^{-1}.Y^T.F$$

This uses the pseudo-inverse of Y, because this is an overdetermined system (there must be more samples than the dimensionality of the embedding space). Estimating a new Y' from the computed derivative U gives:

$$Y' = F.U^T.(U.U^T)^{-1}$$

Again, using the pseudo-inverse (the embedding space has a lower dimension than the particle set). Combining these two equations, thus eliminating the derivative U, yields:

$$Y' = F.F^T.Y.(Y^T.Y)^{-1}.((Y^T.Y)^{-1}.Y^T.F.F^T.Y.(Y^T.Y)^{-1})^{-1}$$

This simplifies to:

$$Y' = F.F^T.Y.(Y^T.F.F^T.Y)^{-1}.Y^T.Y$$

This is true for binary membership. If membership is weighted, one can denote M as the diagonal matrix of membership weights and write:

$$Y' = F.F^T.M.Y.(Y^T.M.F.F^T.M.Y)^{-1}.Y^T.M.Y$$

Note that the matrix F only appears in this formula in the form $F.F^T$, which is a much smaller matrix. It is therefore possible to define a pre-computable kernel matrix:

$$K = F.F^T$$

Each new member of the neighbourhood only appends a new row and a new column to this matrix. The other values remain untouched. Once a neighbourhood is terminated, the kernel doesn't change at all. Note that the kernel may be computed as above or with some differences, for example, some diagonal matrix may be added as a regulator to stabilize the result.

Looking closely, one recognizes a function of the form Y' = C.Y. The updated embeddings are a linear combination of the previous ones, with the coefficients C a function of K, Y and M. This means one update iteration could be regarded as a power iteration solving a least-squares system of equations. This illustrates links to other techniques.

One such other option is to use Locally Linear Embedding (LLE). This technique also tries to linearly approximate the local neighbourhoods, but in a different manner. It assumes that each input $F_i$ is a linear combination of the other $F_j$ where the coefficients add up to 1. The embeddings $Y_i$ are then linearly combined from the corresponding $Y_j$ using the same coefficients. The cross-dependency between the resulting equations can be solved by a singular value decomposition. The power iteration equivalent to this decomposition is to again update the new $Y_i$ from the old $Y_j$ for each sample and iterate, similar to the previous technique. Without going into the details, the method only uses the $F_i$ in a matrix of the form

$$K = D^{-1} - D^{-1}.1^T.1.D^{-1}/(1.D^{-1}.1^T) \text{ where } D_{ij} = - 0.5 \ . \ \|F_i\text{-}F_j\|^2 - \sigma \ . \ \delta_{i \neq j}.$$

Again, this kernel matrix can be pre-computed. Note that due to the inverse, now each new sample will not only append a row and a column, but will also influence all other values of the kernel. However, they can easily be updated, since the inverse of a matrix after adding a row can be reduced to a closed-form formula based on a simple matrix-vector product.

A third option is to use Gaussian Process Latent Variable Models (GPLVM). Here, the embeddings $Y_i$ are treated as latent variables underlying a Gaussian Process on the particle set locations $F_i$. Without further ado, the embedding method can be written with power iterations as a function of the radial basis function kernel:

$$K = [\exp(D)]^{-1}$$

D is defined in the same manner as for LLE. Again there is an inverse, but it can be updated in closed-form.

Some other options are listed here, all of which employ kernels and can be implemented with power iterations:

- Simple Principal Component Analysis, would use a kernel of the form $K=F.F^T$
- Normalized Cuts, uses the non-inversed rbf (radial basis function) kernel $K = \exp(D)$ and normalizes over square root norms of rows and columns.
- Multi Dimensional Scaling uses a dissimilarity kernel of the form $K=D$ and subtracts row and column means, corresponding to doing PCA, but centralized around the mean.
- Hessian LLE: second order equivalent of previously mentioned LLE.

Isomaps isn't needed here, since there are fully connected dissimilarities, and MDS (Multi-Dimensional Scaling) can be applied directly.

Another point of note is aggregation in an information filter. Every neighbourhood $R_k$ may have a set of updated embeddings $Y_i^k$ of its members. Since they overlap, care should be taken on how to combine these updates. They can be applied one after the other, using the new embeddings $Y_i^k$ from one neighbourhood as part of the inputs $Y_i^{k+1}$ to the next neighbourhood update. But this may be unfair, as the influence of all neighbourhoods would not be equal. Moreover, with the use of auxiliary relations over different neighbourhoods as defined earlier, it could be considered incorrect to proceed this way.

More advantageously, all updates may be aggregated in a more probabilistic framework, so that updates from different neighbourhoods can be weighted and combined accordingly. Neighbourhoods that can not give accurate updates should influence the result less. A natural choice would be to use the information filter, defined by Kalman. This allows for even more complex aggregation based on probability matrices, rather than simple weights. The principle is that every neighbourhood $R_k$ would no longer output $Y_i^k$ updates, but rather a probability matrix $P_i^k$ and an information vector $I_i^k=(P_i^k)^{-1}.Y_i^k$. The resulting aggregated update for a sample $Y_i$, member of multiple neighbourhoods $R_k$, would be:

$$Y_i = P_i \cdot I_i, \text{ with } P_i = \Sigma(M_{ik}P_i^k) \text{ and } I_i = \Sigma(M_{ik}I_i^k)$$

Note that these equations also naturally map to the LSQ1 equation above, where it was stated that $Y' = F.U^T.(U.U^T)^{-1}$, from which the information vector $I=F.U^T$ and probability matrix $P=U.U^T$ may be derived. When eliminating U, the formulas become significantly more complicated, but are still only function of the kernel values $K_{ij}$, not of the big matrix $F_{ij}$.

Another point of note is regularization. Power iterations find the largest eigenvectors of a system. By the construction of the iterations describe above, it can be made sure that these largest eigenvectors correspond to the most prominent modes of variation. Like all power methods, it is necessary to ensure that uncorrelated modes are found, or else all dimensions of the embedded space would converge to the same mode of variation and be degenerate and thus redundant.

This required regularization can be done by normalizing and orthogonalizing the eigenvectors. The straightforward method would be Gram-Schmidt Orthogonalization, but convergence can be accelerated by various techniques, like Arnoldi or Lanczos algorithms. It amounts to solving the underlying overdetermined system of equations. Other optimization methods may also be used.

Embodiments of the present invention are preferably applied after aggregation. Note that it is independent of the learning algorithm and does not necessarily have to run each learning iteration, as suggested by the block diagram above. Regularization just has to occur once in a while to avoid degeneration of the embedding space.

In some cases, the fixed sample to neighbourhood membership may pose assumptions that are too restrictive. It may be advantageous to have a more flexible membership relation, which results in more stable models and less of the disadvantageous side-effects, like drift.

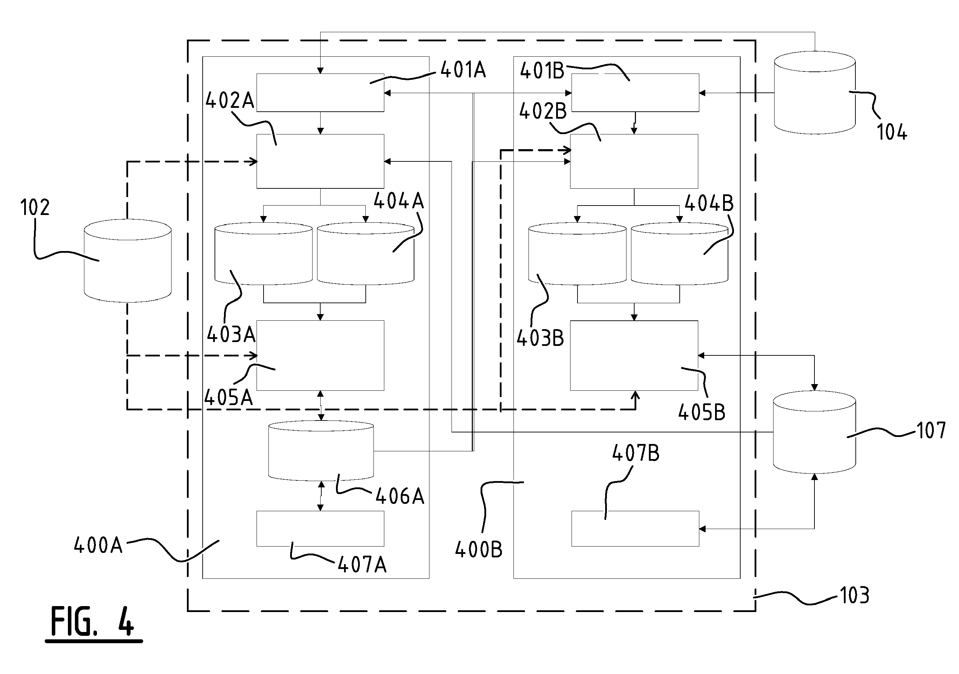

Figure 4 illustrates schematically another learning module 103 for an embodiment of a system according to the present invention. 102 are memberships, 104 are relations, 107 are embeddings, 400A indicates maximization, 400B indicates expectation, 401A and 401B are respective warping modules, 402A and 402B are respective modelling modules, 403A and 403B are respective probability matrices, 404A and 404B are respective information vectors, 405A and 405B are respective information filter aggregation modules, 406A are derivatives, 407A and 407B are respective regularization modules.

By abandoning fixed membership, the kernel matrix can no longer be pre-computed, as it would change every iteration. It is therefore necessary to work on the big relation matrix $F_{ij}$ directly. To compensate for the increase in complexity, another trick can be used to keep computations tractable. These embodiments will be described using the first learning method LSQ1, but other methods may also be used. Above, elimination of the latent derivative variable U led to the use of kernel matrices. When it is impossible to create kernel matrices, one can make this latent variable U explicit.

As a result, the learning method will now iterate between a modelling stage that learns the derivatives $U^k$ for each neighbourhood $R^k$ from sample members Y and corresponding relations F, and an embedding stage that uses these derivatives $U^k$ and the relations F to propose new embeddings Y. This is similar to other expectation-maximization techniques (EM) that try to maximize an energy function (maximization phase: fitting the model (derivatives) to best explain the observations) with latent variables (expectation phase: estimating the latent variables (embeddings) from the model).

The gain comes from creating two probabilistic information filter frameworks, similarly to above. The information filter of the modelling (maximization) stage will aggregate updates to the derivatives of a neighbourhood, coming from all relations of samples that are member of that neighbourhood. Note that each of these updates individually are degenerate, because they result from an underdetermined system of equations. Together, the information filter combines them into an overdetermined system. The second information filter is in the expectation stage. For each sample, all updates coming from the neighbourhoods assigned by the membership matrix, are aggregated. The gain comes from decomposing the problem into two orthogonal ones. Instead of solving the influence of each relation on each embedding, which is order of magnitude $N^2$, the problem is split in two sub-problems of order of magnitude N.

A difference with embodiments described above is that those iterated over the different neighbourhoods, and per iteration performed the (implicit) EM-steps. These embodiments do something similar, but inside-out: inside the two (explicit) EM-steps, there are iterations over the different neighbourhoods.

Making the variables $U^k$ explicit has the added benefit that it facilitates interpolation as well. Interpolation is no longer based on the embeddings Y and relations F directly, but can solely be based on the derivatives $U^k$. The gain is similar, in that an $O(N^2)$ problem is split into two $O(N)$ problems (one of which is already solved by the modelling step).

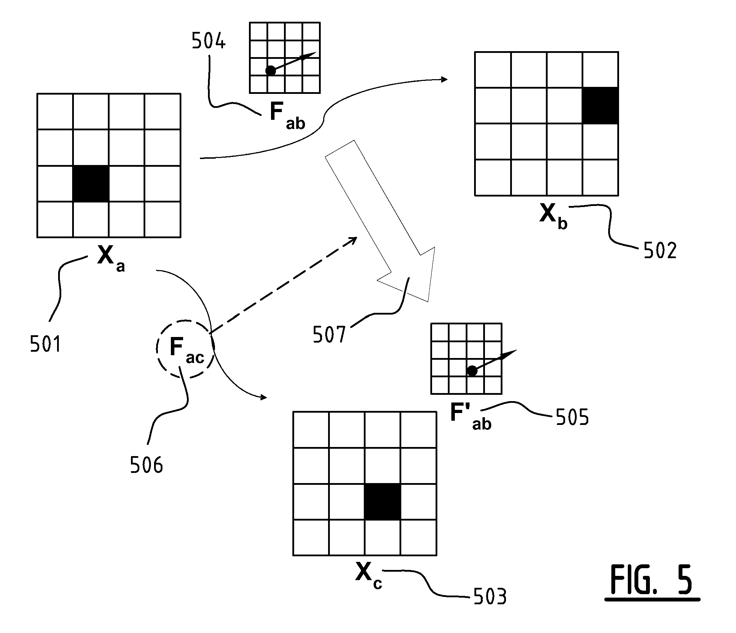

A point of note is warping. Particles (as described above) yield point-to-point correspondences between all samples in the clique. Using flow maps is different. Flow maps are always registered to the framework of the originating sample. This means, that when comparing one flow map to a flow map originating from another sample, it may be necessary to first warp that flow map to the correct framework. However, it might not be known what flow map to warp by. The problem is illustrated in figure 5.

Figure 5 illustrates schematically an example of warping a relation $F_{ab}$ to a framework of $X_c$ in an embodiment of a method according to the present invention. In figure 5, 501 is a first sample $X_a$, 502 is a second sample $X_b$, 503 is a third sample $X_c$, 504 is a first relation (e.g. a flow map) between 501 and 502, 505 is a second relation (e.g. a flow map) between 501 and 502 obtained by warping said first relation 504 from the framework of said first sample $X_a$ 501 to the framework of said third sample $X_c$ 503, 506 is a third relation (e.g. an approximated flow map estimated from the (current) derivative(s) of the neighbourhood to which 501 and 503 belong) between 501 and 503, and 507 represents warping from 504 to 505 using the third relation 506.

An object is seen in samples $X_a$ and $X_b$. The flow map $F_{ab}$ between $X_a$ and $X_b$ is known and is registered to the framework of sample $X_a$. It may be desired to update neighbourhood derivatives $U_c$ based on this new flow map. But the neighbourhood is registered to framework $X_c$. One should first know the flow map $F_{ac}$ between $X_a$ and C to be able to warp the observed flowmap $F_{ab}$ to a flowmap $F'_{ab}$ in the framework of $X_c$. Typically, that information is unavailable (i.e. not present in the database storing the computed relations). A possibility is to use the old neighbourhood derivatives $U_c$ to get to an estimated flowmap $F_{ac}$ to warp by.

This may affect the stability of the expectation-maximization learning algorithm. Since there is an extra dependency on the model variables, convergence might be lost. One way to solve this is to include relaxation in the Information Filter. This means it would not completely update the embeddings/derivatives to the new information and probability, but partially keep the current embeddings/derivatives (illustrated by the double arrows in Figure 3). Relaxation is a suitable mechanism to balance convergence speed and algorithm stability.

Another point of note is regularization. The learning module of these embodiments should avoid degeneration of the embedding space too. This may be enforced using an orthonormalization of the embeddings, as above. But since there are explicit derivatives for each neighbourhood, orthogonality of the derivatives could be enforced, which yields nicer results and converges more quickly. Again, Gram-Schmidt or the faster Lanczos algorithm can be used to enforce that the derivative of the flow maps to each embedding dimension is orthogonal and is normalized uniformly. Also, regularization of both U and Y can happen as well, but they should not be allowed to counteract.

In addition, optional constraints could be added. Suppose the modelled object was viewed from different angles and thus the embedded space would reflect these different angles. Regularization could enforce that the first embedding dimension comprises the left-right camera motion, while the second comprises the orthogonal top-down, etc. Depending on the use case, especially for video manipulation, this may be advantageous.

The membership module may be configured to base its weighting on radial basis functions of the distance between a sample and the centre of the neighbourhood, measured in the embedding space. At each iteration, as the embeddings would have shifted, the memberships are re-evaluated. A neighbourhood could enlist new members or release some. For computational complexity, the weights may be thresholded not to include low-influence samples in the learning computations and defining members and non-members. The width of the radial basis function may be fixed, but may also be chosen in function of the extent of each neighbourhood or the inter-neighbourhood distance. This way, it is possible to cope with dynamic variations in the size of the embedding space.

The membership module may be configured to incorporate a time decay, both with respect to the neighbourhoods and with respect to the samples. As such, old samples have less influence on the model than new ones and vice versa. Old model legacy shouldn't influence new embeddings or interpolation too much. In the same manner, when neighbourhoods or embeddings have converged, it may be decided to not re-estimate them at all, or at least with a lower iteration frequency, in order to reduce complexity.

The module may be configured to enforce implicit membership of one special sample to a model, acting as its exemplar for interpolation and the corresponding embedding as the centre of the model. This way it gets updated in a natural way. This implicit membership could be made lifelong or be dynamic as well.

The neighbourhood generation module may be configured to propose to create new neighbourhoods at a fixed rate, or it may be configured to base its decision on the membership matrix. If a neighbourhood has few members for a long period of time, it may be decided to terminate the neighbourhood in order to free the resources for generating new neighbourhood. The decision could also be made directly from the neighbourhoods themselves. If two neighbourhoods are too close, they will have (many or all of) the same members and they will describe the same part of the model. One neighbourhood is redundant and can be eliminated.

On the other hand, when the distance from a sample to its closest neighbourhood is large, it will have low weights everywhere and it is advantageous to start a new neighbourhood in the vicinity. It is possible to base this decision directly on the neighbourhoods themselves. If the there is a region in the embedding space with low coverage of the neighbourhoods, a neighbourhood could be added there.

The optical transport operator of choice would be dense optical flow. Particle Videos may be less advantageous if there is no formation of fully connected cliques. Rather the sample-relation graph will look like a long string with several auxiliary interconnections.

The flexibility of having dynamic membership allows the following for the decision module. In an online setting, the link decision module is configured to always suggest the optical flow between a pair of consecutive samples (i.e. samples obtained incrementally after each other; in other words, the last sample and its predecessor, which is its immediately preceding sample). Because of drift (see above) and slow convergence of the learning algorithm, the module may also be configured to suggest auxiliary flow maps between non-consecutive samples. The slow convergence happens because when only consecutive relations are regarded, an update in one of the early embeddings would take many iterations to ripple through to influence embeddings of later samples.

Optical flow maps are typically only accurate when the input images are close. This is (nearly always) true for consecutive samples or frames, but it is advantageous to not try to compute optical flow between distant samples. Not only because this wastes computational time, but also because the learning algorithm would be based on inaccurate flow maps, since it is not easy to assess flow map accuracy. Their corresponding distance in the embedded space can be a hint, but since this space is still being learnt, new samples may not have converged to good locations yet.

Some embodiments comprise comparing the shortest path over the graph with the minimal Euclidean distance in the embedded space. The shortest path from each sample to each other sample in the undirected graph, can be computed efficiently using Floyd-Warshall or similar efficient algorithms. Pairs of samples with large shortest paths, but small Euclidean distances may then be selected for creation of a new flow map.

Other embodiments comprise linking a fraction of the samples (e.g. one in five) with the exemplar (see above) sample of the closest neighbourhood. This way, they get a more absolute offset, at least relative to the neighbourhood, instead of relative to another sample.

The advantages described above follow inter alia from a representation format that splits bulky long-term models from the dynamic rendering parameters. Current video codecs don't make such splits. Other types of modelling efforts have not reached the maturity to prove that they can work for this use cases. Embodiments of the present invention show that it is possible to create a type of model that has large prediction capabilities.

An improvement of embodiments of the present invention over AAM-based methods is achieved by generalizing the control-point concept, making the algorithm object-class agnostic. There is no need for manual input. The model is also more flexible by extending to non-linear manifolds.

An improvement of embodiments of the present invention over OFM-based methods is achieved by making it work in an online streaming setting. Brute force OFM would require unrealistic resources for real-time processing. Embodiments of the invention comprise one or more mechanisms to reduce the needed computational power.

Classical video coding paradigms based on macroblocks and motion vectors are beginning to reach their limits. Many research labs are looking for other paradigms that could give an extra improvement. It is an insight of the inventors that modelling is crucial for that improvement. If video resolution and video consumption keep growing as it does now, the need for a new codec will be imminent.

A second trend in video consumption is the need for personalization and content manipulation. Current representation formats don't offer that kind of flexibility. Modelled approaches do.

Below, an entirely optional extension to embodiments of the invention will be described. Moreover, the skilled person will understand that the optional extension described below may also find stand-alone application, i.e., not in conjunction with the above described embodiments of the invention, but directed to solve a separate problem in a manner independent from the embodiments contemplated hereinabove. By consequence, in the following description, reference to 'embodiments' and/or 'optional embodiments' is to be seen from that point of view.

As many everyday processes become user-centric, so does watching a video. No longer the producer is the single source of the video, but the consumer contributes to the final rendering. This may be done by choosing between scenarios, but also by having a say in the choice of viewing angle. The former, for now, doesn't yield many latency issues; the choice is discrete. Mostly, these scenario choices are binary, so they can both be buffered for a short period. The latter however does impose strict responsiveness to a larger degree of freedom. The choice of viewing angle is not discrete, it is made in a continuous space through which we wish to traverse smoothly.

When changing viewpoints or deforming objects, one wants to see the effect immediately and not wait until the appropriate part of the video stream is available. Therefore, it is necessary to have all data needed for the yet unknown interpolation to be available at that point. Network latency prohibits having the time to download the necessary data. This means that it is necessary to buffer some auxiliary data that is needed to quickly respond to user input. Constraints on this user input will allow constraints on the auxiliary data.

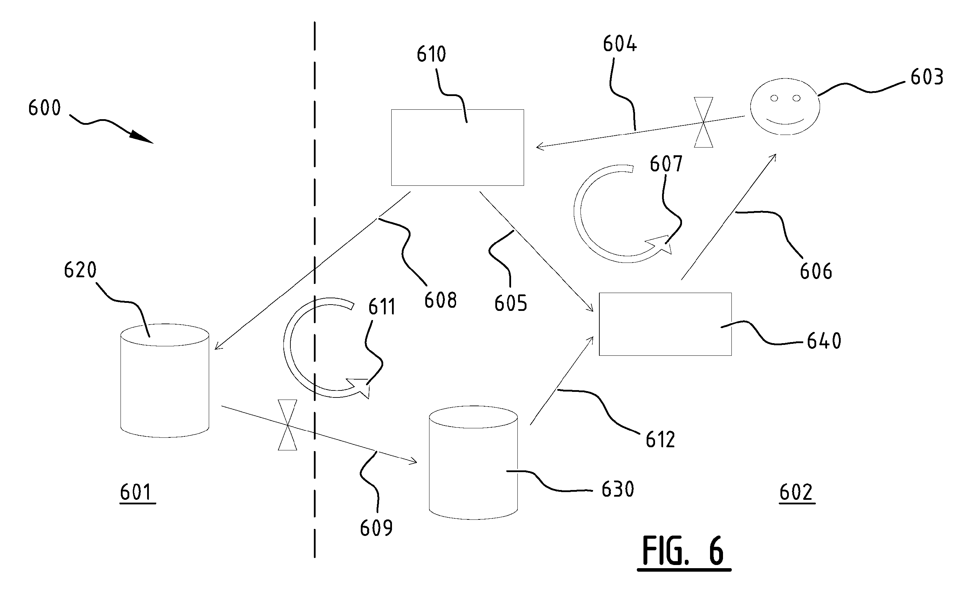

Figure 6 illustrates schematically an example setting 600 for an embodiment of a method according to the present invention. 601 is a server, 602 is a client, 603 is a user, 610 is non-discrete feedback, 620 is a discrete model, 630 is a subset of a model, 640 is interpolation, 604 indicates the user's 603 interactions resulting in non-discrete feedback and subject to interaction restrictions, 605 indicates the use of the feedback for interpolation 640, 606 indicates the user 603 viewing the interpolation, 607 represents interaction latency, 608 indicates a request, 609 indicates data transmitted from 601 to 602 subject to bandwidth restrictions, 611 represents network latency, 612 indicates the use of 630 for interpolation 640.

There is a user at the client side looking at content and interacting with it. The content is generated from a discretized model at the server side. Interpolation is used to get a continuous rendering space from the discretized model. The network between the server and the client has constraints. It inevitably induces latency and bandwidth is restricted, or at least bandwidth requirements should be minimized. On the client side, the user sets his own requirements. He may want to be maximally flexible in the variety of interactions that are allowed, while keeping minimal (zero) latency between his feedback and viewing the effect, thus high responsiveness. The question then becomes how to optimize all of these constraints at once, and in particular, what auxiliary data is kept in the subset of the model at the client side?

If one of these constraints wasn't required, there would be no problem:

1. If there were no network latency, we would just request and download the discrete sample of the model corresponding to the current feedback, which would be in-time at the client side for interpolation. However, significant network latency makes that that sample would not be received in-time for responsive rendering.
2. If bandwidth wouldn't be an issue, the client would ask for the whole model to be pre-fetched, so it could interpolate at will. However, the whole model is very large and realistic bandwidth limitation prohibit downloading all of it.
3. If the user wouldn't require immediate responsiveness, an interaction latency could be allowed equal to the network latency, so again no larger subset of the model would be needed than exactly what is needed for the current request. However, responsiveness requirements are in the order of 10ms, while network latency could be up to seconds.
4. If the user weren't allowed much interaction, there would also not be a need to download a larger subset, because the small subset serving the current request would be enough to render the little freedom the user has. However, the user wants to freely move around over the different degrees of freedom he's offered. This is typically erratic and difficult to predict, so many more samples need to be available at the client side for direct responsiveness.

This auxiliary data comes in many forms. A limited set of use cases (described below) already allows for an efficient representation of the data. Different assumptions result in different solutions, each suited for, but limited to a specific context. The optional embodiments address a broader scope of use cases, where the user has input to the viewpoint, lighting conditions or may even manipulate some deformable objects in the scene. This requires an appropriate new representation format and an efficient way of streaming only the necessary data needed for low-latency responsiveness.

Technically, in order to reduce the bandwidth between sender and receiver, this requires a representation that encodes the current rendering and all paths the user may follow, within the time delay between production and rendering. Assuming the user moves along these paths in a smooth way, e.g. he doesn't jump between distant viewpoints, but gradually navigates. It means that the representation should define the concept of a neighbourhood around the current state. Moreover, incremental transmission of these neighbourhoods should be allowed.

The optional embodiments propose to use Appearance Models as the representation format enabling this kind of applications. Appearance Models are inherently discretized, using appearance samples to represent the manifold of degrees of freedom to the user. The problems to be solved are then the following: What server-client architecture is needed for basing a low-latency video application on appearance models? What information resides where and what is communicated? The constraints are finding the optimal balance between low bandwidth and highly flexible, but zero-latency interactivity.

In this specification, abstraction is made of the type of interaction or the user interface. The optional embodiments contemplate the representation format, the architecture and transmission issues needed to enable such use cases.

Another point of note is latency-crucial applications. The optional embodiments solve yet another problem from a different use case. Suppose live content is streamed from a remote device (the server) and a user wants to react on it, not necessarily by changing the content itself, like in the former use case, but in a way that the latency between the captured video feed and the user's response is crucial. Examples are: remotely flying a drone or remotely operating robotic machinery (for instance medical) from a camera feed. It is crucial that the user sees exactly what happens at that time, so he can quickly respond. If there is latency, he has to compensate for that in his mind and this often leads to over-compensation. Putting this in system theory terms, the action-reaction loop has a delay in it and can thus be unstable.

The problem is that video data is too bulky to be sent without latency. It gets spread over packets and they need to be assembled first before one can build a new frame. This can be solved by putting a buffer at the receiver, but buffers introduce latency (up to seconds). One could require the packets all to have high priority and get special treatment by the network, but that is not a scalable solution if everyone wants the highest priority.

The optional embodiments use a representation that splits the video in a bulky low-priority part and a light-weight high-priority part. Appearance models provide this option. The model is big, but it is long-term. One can render many appearances from it. The embedding part ensures that one only needs a few dynamic parameters to render your content. Only those are sent through the fast lane.

The problem is similar to the one above, but with the feedback not coming from the side of the client, but coming from the live-producer at the server side. In general, the optional embodiments aim to cope with the two types of input.

Known techniques do not address these technical issues (yet), but there are some known techniques that answer the same use case, by using other representations than Appearance Models.

It is possible to regard the interactive video application as a user feedback mechanism in the computer graphics pipeline. As a consequence, the different known techniques depend on how far one reaches back into the rendering pipeline to allow user input. A 3D mesh representation of the objects is produced from the script. These meshes are projected and rasterized into a framebuffer and a depth map. Then the current viewport is cropped from the framebuffer. The further back in the pipeline, the more metadata about the scene is required. The skilled person will appreciate that this is just an analogy, and doesn't necessarily correspond to actual implementations.

Interactive pan-tilt-zoom is one such known technique. Consider the use case where multiple users pan and zoom through an omnidirectional video stream. A panning rotation from a fixed viewpoint reduces to the translation of a crop window. Zooming reduces to scaling. Using cylindrical projection, this means that the omnidirectional video may be represented by large rectangular frames of which each user needs a sub-rectangle of pixels. If zooming and panning occurs smoothly, a slightly larger window than this sub-rectangle needs to be buffered for immediate response to user input.

Another representation is known wherein the video is cropped into overlapping windows that are larger than the user's, allowing for zero-latency response when the user is panning. Another appropriate efficient representation for this use case is known by tiling the whole of the omnidirectional frame into a rectangular grid, each streamed separately. The user only needs to subscribe to a subset of streams that overlap with his current viewport, plus auxiliary to closely neighbouring grid locations for immediate response when the user suddenly decides to pan there. Notice how in both cases, discretization (splitting in tiles) answers the technical question, as already suggested in the previous paragraph.

This known approach may break when true viewpoint changes, rather than viewing angle changes, are requested. These cannot be represented by a mere cropping of the full frame. The approach taken by the optional embodiments may use discrete partial encodings on hierarchical levels to efficiently serve multiple users, preferably in a different manner than using a restrictive grid.

Geometry aware interpolation are another such known technique. The prevailing solution for handling viewpoint changes is to encode the geometry of the scene within the stream. This can be done in several ways. For small changes it suffices to encode a depth map. This represents the different disparities needed for far and near objects. At the depth discontinuities, viewpoint changes impose and expose occlusions of far objects by near ones. Common practice is to resolve this by an inpainting technique. This approach, however, is limited due to the fact that inpainting by definition doesn't contribute new texture to the formerly occluded regions, but rather extends existing texture of the presumed far object. This is only applicable for small regions and hence small viewpoint changes. When changes are larger, the exposed texture should also be encoded in the representation.

Other geometry aware representations are known such as depth planes, meshes and point clouds. A major disadvantage of these is that production then requires a full analysis of the geometry, which is computationally hard and sometimes even unfeasible. Also, the representation will be fully geometrically oriented and can only deal with viewpoint changes; no other manipulations are allowed.

Parametric models is yet another such known technique. Even further back in the computer graphics pipeline, objects may be represented by deformable rigged meshes. The user can then manipulate the objects themselves. This happens for instance for rendering computer games. However, this requires awareness of the deformation freedom and effects, which is feasible for 3D artist-designed CGI objects (e.g. in games), but requires computationally hard analysis when it needs to be created from real captured views.

For specific use cases, techniques are known that employ such models for video streaming. Although not designed for user interactive use cases, certain known techniques like FaceTime solve the same research challenge as stated above. FaceTime uses Active Appearance Models (AAM) to represent the deformations of the face of the user in a video communication context. This is used as error concealment for bridging packet losses. The face is represented as an appearance and a set of sparse pre-defined control points. The model comprises the mean appearance and shape plus possible variations of it, meaning the covariation of appearance and control points. PCA is used to define the principal variation axes. One could think of using this kind of model in an interactive application as well, allowing viewpoint changes or face morphing. In this case information is split in discrete sets of data in a different manner. There is no sampling of a continuous space of embeddings, but rather each discrete base (principal component) defines a dimension of the embedding space. It is an ordered list, the first base being more important than the second, etc. One can add bases, but one always includes the lower ones.

The approach taken by the optional embodiments may make abstraction of the deformation analysis and handle it like any other appearance change. Also, it may make abstraction of the type of deformation on the scene, such that a user will be able to navigate through any encoded degree of freedom, geometric or otherwise.

The optional embodiments propose to use less limiting appearance models compared to known solutions, and apply them to a user-responsive transmission context. Video objects may be represented by different appearance samples; e.g. a frontal view, a view from the right, from the left, etc. These appearances need not be defined only by different viewpoints, but different deformations and lighting can also be taken into account. Samples may model a full frame at once, which requires no segmentation, but preferably model independently deforming/moving scene objects.

Samples are a discretization of the subspace of possible appearances of an object. With known techniques, multiple discrete grid locations are needed to compose the desired view, which resides in a continuous space of possible viewports. Similarly, for the optional embodiments, multiple neighbouring samples are needed to interpolate the desired appearance of an object. The samples are discrete points, but interpolation allows a full continuous space of appearances.

The samples are embedded on a low-dimensional manifold defining the neighbourhoods of each state. The manifold defines possible transition paths between the discrete samples. Along these paths, a new appearance is interpolated from its close neighbours, using distance metrics and derivatives on the manifold. Each point on the low-dimensional manifold corresponds to a feasible high-dimensional appearance of the object. Samples define discrete points of correspondence; interpolation is used to fill the gaps. As extrapolation performs worse than interpolation, enough samples surrounding the current state should be available.

The user now partially co-defines the path on the manifold that is followed to render an object's appearance. For example, the user may shift the path to another viewpoint, or he may choose the same viewpoint but alters the deformation of, say, the lips of a face to make the person say something else. When these paths change smoothly, we can predict which samples will be needed for interpolation and which don't have an influence. The sender will only transmit those samples that are needed by the user. By making the appropriate discrete samples available, enabling prefetching the neighbourhood, the optional embodiments allow a very responsive experience for user interaction.

To assure that the user follows smooth paths, the manifolds are constructed in such a way that they do, at least for representing normal physical processes. If a manifold can be created that reflects what's going on physically, paths will inherently be smooth, because physical processes have inertia (they don't suddenly jump from one state to the other). Gradual viewpoint changes, normal transitions of expressions of the face, feasible pose variations, etc. will all yield smooth paths on the manifold. Fast unpredictable changes in appearance may not. The optional embodiments might benefit from manifold learning based on OFMs.

Manifold learning is a collection of techniques used for embedding high-dimensional appearances in a low-dimensional space, such that relations between samples are preserved. PCA is the most well-known dimensionality reduction technique. Other examples of such algorithms are LLE, MDS, Isomaps, and HLLE. Physically close appearances will correspond to close points on this manifold. To define which appearances are physically close, it is proposed to use an optical transport operator to define those relations. Such an operator describes where to find the corresponding point from one sample in another sample. Pixel intensities themselves may change quite abruptly, while a point cannot jump from one place to a totally different place when moving gradually. Therefore, optical transport operators are better suited for learning the manifold than the pixel appearances themselves. A logical choice of operator would be optical flow. Sparser representations like Particle Videos and KLT trackers may be advantageous in that relations can be propagated over large neighbourhoods of samples (flow maps don't accumulate well).

A second observation is that, although it would be theoretically possible, it is not recommended to represent the frame as a whole by a single appearance model. Because the number of samples is exponential with the degrees of freedom of the frame (the samples lie in the product space thereof), special care needs to be taken to choose what defines a good object segmentation for appearance models. A human figure may have too many degrees of freedom (arms, legs, fingers, face expression, etc.) to capture every possible combination of poses. At least the frame should be split in objects. In some cases it may be good to split up the object in its parts. A more elegant way is to build a hierarchy of coarser sampled models for the whole of the object plus finer sampling of the different subparts. This way, sampling density may be more balanced without the exponential increase. The segmentation should be based on the way parts of the scene have independently varying appearances. Motion segmentation algorithms may be based on the same optical transport operators as proposed in the previous paragraph. Algorithms to that end are known to the skilled person.

The optional embodiments contemplate inputs coming both from the server's side and the client's side. The latter can be optional as in the second use case about latency-crucial live-streaming above.

Figure 6 illustrates what amounts to a block diagram for appearance model based rendering, split over a server and a client. The server would have the full model and a script manifest file. The script tells the story of the content. It defines a trace through the embedding space. This trace is rendered using a partial local copy of the model at the client side. However, user feedback is allowed, so the embedded state that is to be rendered is co-defined by both the script and the feedback. Up to this point, the setting would look like the one of Figure 6.

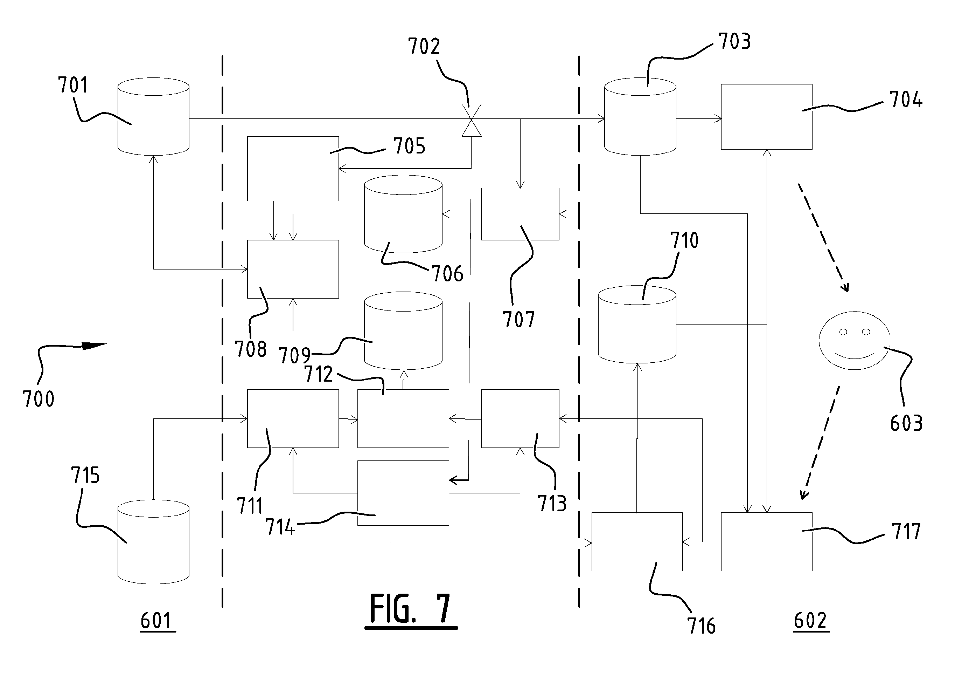

However, the network constraints must be taken into consideration. To this end, the optional embodiments propose to divide functionality between server and client. The modules providing this functionality decide which parts of the appearance model are downloaded and kept in the local partial model. The resulting block diagram is illustrated in Figure 7.

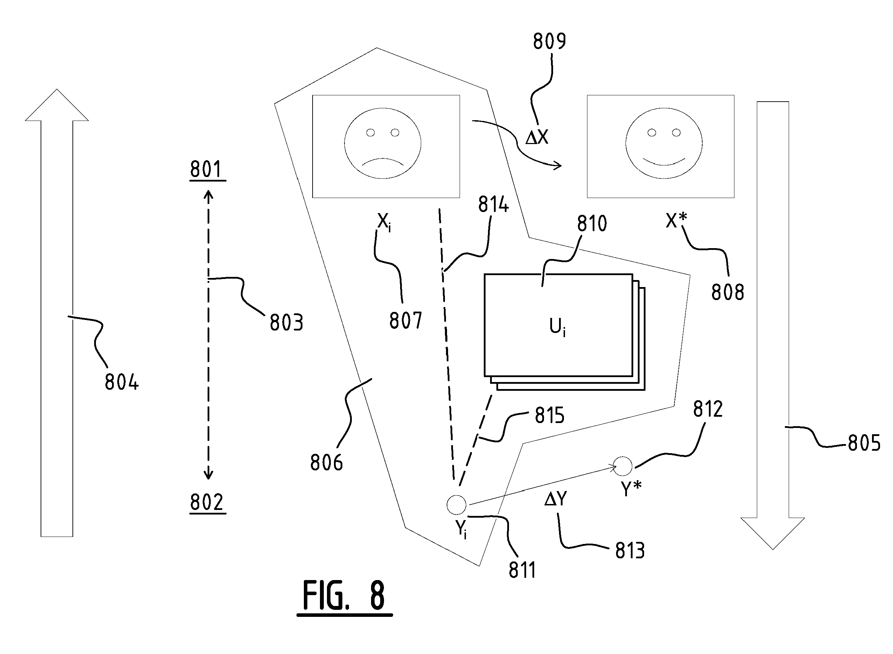

Figure 7 illustrates schematically an example embodiment of a system 700 according to the present invention. The skilled person will understand that the embodiment of a system for incremental manifold learning is not explicitly shown in Figure 8, but may be assumed present. In further developments, it may be contemplated to not include the modules of that embodiment, but to provide the shown system in a stand-alone manner.

601 is a server, 602 is a client, 603 is a user, 701 is a model, 702 represents transmission (e.g. bandwidth, latency) restrictions, 703 is a subset of a model, 704 is an interpolation module, 705 are channel bandwidth constraints derived from 702, 706 is a coverage pdf Q, 707 is a sample coverage estimation module, 708 is a compare module, 709 is a prediction pdf P, 710 is state $Y^*$ (which may change over time), 711 is a prediction module predicting based on a script 715, 713 is a prediction module predicting based on translation module 717, 712 is an aggregation module for combining the predictions, 714 is a channel latency probe module for detecting 702, 716 is an aggregation module for combining the script 715 and the translations of translation module 717. The user 603 views the interpolation from the interpolation module 704, and provides feedback to the translation module 717.

It is noted that this is a functional diagram; the blocks and arrows don't necessarily correspond to actual physical entities. Moreover, the modules do not have to reside where they are shown in Figure 7 either, but could reside at the client side, or as a service running on the server or even in the cloud. It is noted, however, that the whole feedback-state-interpolate loop resides strictly at the client side. This is necessary, because else it would be prone to network latency, which should be eliminated. In particular, what is denoted as 'client' does not physically have to be at the client's terminal as long as there is a latency-free connection from those modules to the actual terminal. It might as well be in the cloud, probably quite close to the user. For the server, an analogous consideration applies: it doesn't really have to be the physical location where the model is stored; it might be a part of the CDN (Content Distribution Network).

An explanation of the function follows, by starting at the requested state $Y^*$. This is a point in the continuous embedded space, corresponding to a certain appearance. Probably, it will not accidentally coincide with one of the discrete samples in the model, so there is need of an interpolation module to return the final rendering, based on multiple samples and some auxiliary data (see below) in the local copy of the partial model. The user views this rendering and wishes to alter it. This feedback will be in a semantic space (i.e. a space where the dimension axes correspond to actual physical things like camera panning or tilting or the expression of a face). This feedback needs to be translated into a request in the appearance model's embedding space. This translation is based on data in the model (see below). The translated feedback will typically be in the form of an offset from the script. Together with the story in the script, it is aggregated to yield the new state $Y^*$. One can think of use cases where the script reduces to zero and all input is expected from the client. Also, it is possible for the script to include some constraints on the degrees of freedom the client has for altering the rendered state, e.g. in order to keep some artistic property for the producer. The script can also include metadata about camera poses or a decomposition of the state in camera pose, object pose, lighting, etc. In this specification, abstraction is made of the exact representation of the script. It is a representation that can be 'aggregated' with the client's input.

The other modules ensure that whatever data of the model will be needed for interpolation or for the translation step, are pre-fetched in time, keeping in mind the latency and bandwidth restrictions of the network. First, the user's feedback is predicted. This prediction is a stochastic entity with dense probabilities for the near future predictions, but with spreading probabilities when predicting further in time. The prediction module has to predict at least as far ahead as the network latency. The end result is a probability representation that reflects with how much probability a certain point in the embedding space will be visited within the time window of network latency. Similarly to defining the final state $Y^*$, this probability is also aggregated with a prediction of the script, resulting in the combined prediction probability density function (pdf) P. Prediction of the script may be as simple as reading ahead in the script, if it's available. In some cases, e.g. when the content is created online and it is a live streaming application, the trace in the script hasn't been defined for the future, so it also needs to be predicted, similarly to the feedback of the user.

This pdf P is be compared with the sample coverage of the local partial copy of the model at the client side. If the probability of a certain embedded state in the future is high, and that area of the embedded space is significantly undersampled, some samples may be added in that neighbourhood. A coverage estimation module yields a coverage pdf Q reflecting for which areas in the embedded space interpolation will be good and for which not. A comparison module searches for big discrepancies between P and Q and based on the bandwidth constraints, thresholds whether or not to request extra fetches of samples from the server's model for adding them to the client's copy.

The representation format is more precisely defined by what model is needed for interpolation. Some discrete appearance samples are required, plus the extra information needed to know how to regress the discrete samples into a continuous space, from which it is possible to render any arbitrary state. By employing manifold learning, this extra information is twofold. First, it should be known how those appearance samples are embedded on a low-dimensional manifold. Second, warping information is required on how to change such an appearance sample when deviating from its corresponding embedding.

Above, the notion of derivatives in the model has already been described. These are the local gradients of the Optical Flow Manifold with respect to a unit step in each of the embedding directions. Each neighbourhood would then be represented by an exemplar appearance $X_i$, its embedding $Y_i$ and a number of flow maps $U_i^d$. A requested state $Y^*$ targets an interpolation of the first order form $X^*[p + U_i[p].(Y^*-Y_i)] = X_i[p]$, for each pixel location p, with the dot denoting the matrix-vector product between the sample's local derivative matrix and the vector between the requested state and the embedding of the sample.

Figure 8 illustrates schematically interpolation and the dual translation when using a model that includes a representation of derivatives, in an embodiment of a method according to the present invention. 801 indicates the appearance space, 802 indicates the embedding space, and 803 indicates the derivatives between 801 and 802. 804 represents interpolation, 805 represents translation, 806 is the model, 807 is a first sample $X_i$, 808 is an interpolation $X^*$ based on a requested state $Y^*$, 809 is a difference between 807 and 808, 810 are flow maps, 811 is the embedding associated 814 with sample 807 and associated 815 with the flow maps 810, 812 is a requested state $Y^*$, and 813 is a difference between 811 and 812. Only one sample is pictured. Typically, the model would have many (Y,X,U)-triples.

Alternatively, the model can be sampled more densely, but without the derivative flow maps. Rather, per sample, the locations are kept of one or more particle sets that define correspondence relations to neighbouring samples. These can be used similarly as described above for interpolation. Interpolation could then consist of a kernel computation of the correlations of the neighbouring samples, a module that would compute a weight vector from this kernel and a linear combination module that uses the weights and the locations of the particles of the samples in the neighbourhood to compute the locations of the particles of the new appearance. Values of the kernel matrix can be pre-computed by the server and included in the representation as well. It is noted that, in that case, the actual matrix will still be assembled from these values at the client side, since its rows and columns are added incrementally with the arrival of each new sample. When they are not pre-computed, the client may choose to compute them more efficiently from the embeddings than from the particle sets. This approximation is possible because it is an object of manifold learning that the local behaviour of the manifold is kept. This implies that the correlation kernel based on appearances and the kernel based on embeddings are very similar.

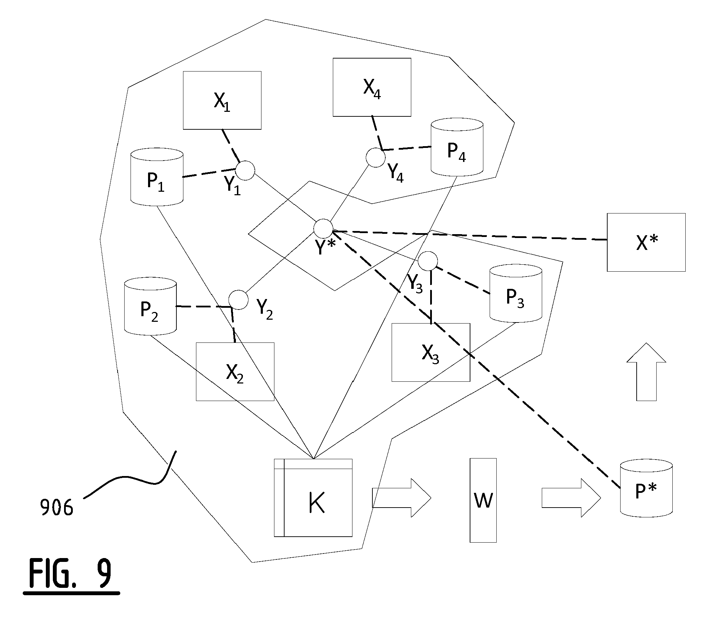

Figure 9 illustrates schematically interpolation from a representation with a number of particle sets per sample, in an embodiment of a method according to the invention. 906 is a model. Each sample consists of a (Y,X,P)-triple. Only one particle set per sample is shown; typically there will be more, because of the limited 'lifetime' of particles and the need to create overlap (see discussion above). From the kernel matrix K, an interpolation weight vector W is computed. The corresponding particle sets $P_i$ are linearly combined to $P^*$. This new set is used to morph the appearances $X_i$ into the requested final rendering $X^*$.

If bandwidth is heavily limited, there may be a need for a representation model where the relations between neighbouring samples are not made explicit in the representation yet and have to be reconstructed by the client. The representation would only comprise the appearance samples $X_i$ and the corresponding embeddings $Y_i$. In the interpolation module, the client re-computes flow maps or particle tracks between neighbouring samples, based on the embeddings. Moreover, there arises no difficulty from the fact that the resulting derivatives or particle sets don't exactly correspond to the ones computed by the server, since manifold learning and interpolation are independent from each other (i.e. orthogonal).

However, it is not advised to exclude the embeddings from the representation format, because they are needed to make a reference frame for the script file. If they were not included, the client would have to learn the exact same embeddings as the server would have computed them. In contrast to the previous paragraph, these do need to be exactly the same. There are certain ambiguities when learning a manifold, and it generally is not a convex problem with a single global solution. Therefore, one can easily end up with a different manifold. Also, the representation's size of the embeddings $Y_i$ is almost negligible to the size of the appearance samples $X_i$ themselves. Manifold learning algorithms can be made deterministic, though, so it is technically possible to exclude it from the representation, if that is desired in further developed embodiments.

A user might give feedback like "move to the left" or "render that face more happy". These are semantic requests. They correspond to a certain change in appearance X*. They also correspond to a change of the embedded state Y*. The present specification makes abstraction of how the application translates the user feedback from the semantic space to the appearance space. This can be implemented by a variety of controls and GUI features, as is known to the skilled person. However, the optional embodiments do comprise the translation of this change in appearance to the change in embedded state. The change of appearance comes in the form of e.g. "move this region of pixels 10 pixels to the right" or "morph this shape into that shape". These $\Delta X$ changes have a corresponding shift $\Delta Y$ in the embedding space. The translate module is configured to compute that correspondence.

This module would not be needed e.g. for static cases like the pan-tilt-zoom cropping described above; there the tiling is fixed. Behaviour is pre-defined, such that it is known how the tiles are spatially related. In certain embodiments, this extra step is especially advantageous, since it may not yet be known how the appearance samples are related.

It is noted that this is symmetric to interpolation. Interpolation means going from Y* to X* using the model. The translate module is configured to go from a $\Delta X$ to a $\Delta Y$, using that model. Hence, analogously to the paragraphs about interpolation above, there can be different alternatives of translation depending on the representation inside the model. This is illustrated by the downward arrow in Figure 8.

If the representation is based on derivatives, one may look at the local derivative close to the current state, to see which embedding shift $\Delta Y$ corresponds best to the requested appearance change $\Delta X$. In fact, this is an overdetermined weighted least squares problem. The change will focus on a certain region of interest (ROI); hence the weights. For each pixel p in that ROI one can write the equation:

$$\Delta X^P = \Delta Y . U^P$$

Denoting W as a diagonal matrix of pixel weights corresponding to the ROI, the least squares solution to this system can be written using the pseudo-inverse:

$$\Delta Y = \Delta X . W . U^T . (U . W . U^T)^{-1}$$

The normalizer in the inverse could include an extra regularization term for stability or extra constraints.

Alternatively, the representation format could be without derivatives but rather with particles. An overview of the multitude of possible manifold learning techniques has already been described above. They can be implemented using a kernel matrix for efficient computations. When such a kernel matrix is at hand, it can also aid interpolation. Because of the duality of interpolation and the translate module (see above), one can also write $\Delta Y$ as a function of this kernel K, $\Delta X$ and possibly $X_i$. These functions depend on the exact interpolation/learning technique.

The optional embodiments aim to compensate for the network latency. Between the time the client requests a new part of the model and the time he actually receives it from the server, the user might have given feedback for which he immediately requires response. This means that the necessary parts of the model have to be made available by prefetching them, at least for a time window equal to the network latency. So the question becomes: At what states can the user end up in that amount of time? Of course, a computer can only guess, and human users are not deterministic, so the optional embodiments are configured to predict with some probabilistic measure, yielding a pdf P.

Here the power of manifold learning comes to the fore. Although the embedding space typically doesn't exactly correspond to semantically meaningful notions, the general shape of the manifold does reflect the same topology and configuration - at least if the learning algorithm takes special care of this. In the description above it has been argued that learning Optical Flow Manifolds is superior to learning Image Articulation Manifolds. The former is based on an optical transport operator (like optical flow or video particles) and better captures what's going on in the content. The result is that the manifold is a lot smoother. This is important, because if the manifold would be very irregular, it is hard to predict well on it.

On a smooth manifold, embedded tracks that correspond to content that is produced from an underlying physical process, are smooth as well. The physical process may be camera motion, or moving objects or a face talking. Physical laws constrain the behaviour of objects so that they don't make erratic changes. This predictability is reflected in predictability of the embedded tracks. It is noted that since it is impossible to jump from one appearance to a totally different one physically, it is also assumed that the embedded state will follow continuous tracks and doesn't jump all over the embedding space.

Smooth tracks in the low-dimensional embedding space can be predicted using low-order dynamic models (typically zero, first or second order). Usually a noise term is added to compensate for the unpredictable sudden parts.

These are still continuous, but higher-order and thus can't be modelled with the low-order models. A typical implementation of such a tracker is the Kalman tracker. It uses a linear prediction model and Gaussian assumptions on the additive noise. If one wants a first order model, one should add velocity variables to the current state vector and adapt the linear prediction model accordingly. If one wants a second order model, one should add acceleration variables, etc. Because of the Gaussian assumptions, one can represent the probability by a mean vector Y and a covariance matrix P. The linear prediction model can be expressed by a matrix F and the additive noise, by its covariance matrix (often diagonal) Q. Then, increasing a time step returns following recursive equations:

$$Y_t = F.Y_{t-1}$$

$$P_t = F.P_{t-1}.F^T + Q$$

This recursion should be applied a number of iterations equal to the network latency L, starting with a $Y_0$ equal to the current Y* (optionally augmented with the higher-order velocity and acceleration terms) and a small/zero $P_0$. The prediction pdf may be represented by the final Gaussian distribution with mean $Y_L$ and covariance $P_L$.

Alternatively, there may be provided more complex models, especially modelling the start-stop motion behaviour of many physical processes. If a process can be simulated, many trials can be run to see where it 'ends up'. The sample density of the end result of all trials composes the prediction pdf. This technique is known as 'random walks', a theory that comes from modelling Brownian motion of molecules in liquids and gasses. In computer vision, this is often referred to as Monte-Carlo Markov Chains (MCMC). It is also used in a technique related to Kalman filtering, called the particle filter (particle has a different meaning here than elsewhere in this specification).

Note that it is not advised to have a very dense representation of the prediction pdf, like a bin-representation, since the number of elements (e.g. bins) in such a representation would increase exponentially with the number of dimensions in the embedding space. The methods described above already propose good representations: the former uses a single Gaussian, the latter uses particles. One could also use other parametric models like Gaussian Mixture Models.

The optional embodiments are configured to split prediction of a user's feedback and prediction of the server's script. This is because in many cases, the two are governed by different independent decision processes. The optional embodiments comprise predicting both first and aggregating the results afterwards. If there would be a dependency between them, it may be especially advantageous to incorporate predictions and aggregation into one more complex module.

Also, the prediction from the script may be more trivial. In offline produced cases, the script can simply be read ahead, such that no real prediction is necessary. In online live-streaming cases, the representation creates a natural split between discrete long-term data in the model and the highly dynamic continuous state info in the script. The former is bulky and prone to latency. However, the latter is light and may be sent with high priority and thus much less latency, requiring a smaller prediction window.

Another point of note is coverage estimation. Coverage estimation can be considered a representation translation step, and is straightforward. It looks at the representation of the local copy of the client (i.e. the appearance samples that are currently available in the local copy of the client). It notes the discrete samples and outputs a density representation of the discrete samples. As with the prediction pdf above, further developed embodiments may keep a dense representation like a multi-dimensional histogram, though this may be bulky. The samples themselves may already pose a good representation.

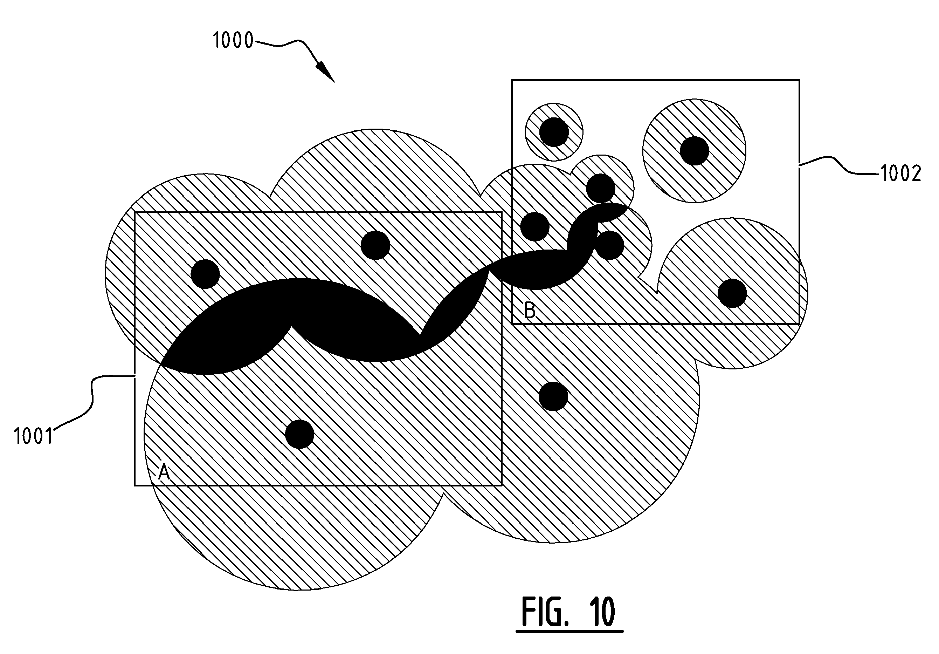

Figure 10 illustrates schematically an example coverage estimation setting 1000 for an embodiment of a method according to the invention. Region A 1001 is much sparser than the densely sampled region B 1002. However, because the manifold is smoother in A, the interpolation regions are bigger and coverage is actually better than coverage in region B, where the manifold is more rugged.

An issue to be addressed by the optional embodiments is: What continuous subspace of the embedding space can be interpolated well. This means that around each sample there should be defined an interpolation region . This can be represented using the aforementioned Gaussian Mixture Models or using isotropic diagonal variances with Parzen Windows. The size of the interpolation regions could be derived by analyzing the appearances, or even better, the derivatives or the particles sets of the surrounding samples. If they vary a lot, the manifold is quite rugged, if they are similar it is assumed more smooth. Rugged manifolds need denser sampling for good extrapolation of the samples, so their interpolation regions would be smaller.

Good manifold learning algorithms try to ensure that when the manifold is rugged, samples are spaced further away. So rugged regions of the embedded space are actually expanded and smooth regions are shrunk automatically. This relaxes the need of good analysis in the coverage estimation module, since it is automatically taken care of by the learning algorithm. However, learning will not be perfect and the restricted dimensionality of the embedding space will force the learner to make approximating choices, so there will always be need of some compensation of the unmodelled behaviour.

An optional arrow was added in the block diagram in figure 6 from the model at the server to this coverage estimation module. This is because without it, the module only sees the selected samples in the clients copy. The module could benefit from knowing which other samples exist in the server's model to make a correct analysis of the manifold. Nevertheless, this feature is optional. The techniques described above do not require it.

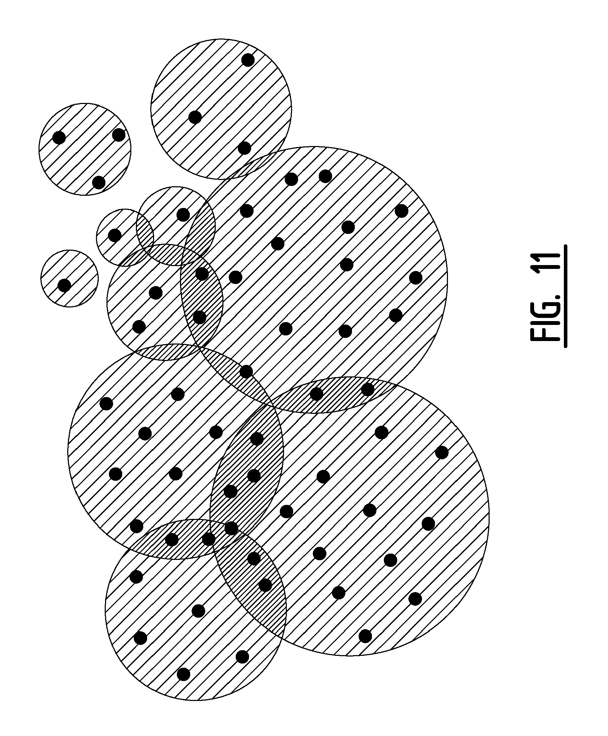

The output of the coverage module is again a probabilistic density function Q. Like the prediction pdf, it might be represented as a GMM, but it could also be represented with particles, where the coverage is resampled, using more samples in the larger interpolation regions. This is illustrated in figure 11. Figure 11 illustrates schematically the example setting of Figure 10 after resampling using MCMC.

The compare module is configured to see which parts of the embedding space have bad coverage Q, but have high probability P to be visited in the coming time interval by the predicted state. The most computationally efficient way to compare two pdfs is to have one sampled (e.g. MCMC) and one parametric representation (e.g. GMM). Then, the probability of each sample can be evaluated using the parametric model. Note that a sampled representation can always be made parametric using Parzen Windows and a parametric distribution can always be sampled. Since the optional embodiments are looking for missing holes in the coverage pdf, it is best to have the prediction P sampled. If many neighbouring samples p evaluate to a low coverage Q(p), then an appearance sample in the vicinity should be requested for download. This can be done by a scoring scheme. This is a sort of PULL-mechanism from the module's side to the server.

Alternatively, one could look at it from the server's side as a PUSH-mechanism. Prediction P(y) and coverage Q(y) are evaluated for each sample y that is in the appearance model but hasn't been downloaded yet by the client. The samples with high P and low Q can be proposed for download. How many appearance samples to download at each iteration depends on the bandwidth restrictions. There may be provided a threshold on a minimal difference between Q and P, the optional embodiments may also be configured to select the top N samples with highest discrepancy.

The choice between these methods depends on where the module resides between server and client, how easy the access to the model is and how many appearance samples there are in the model compared to the sample density of P and Q.

By applying appearance models to the interactive video use case, the problem of latency in user feedback can be reduced, while maintaining flexible interactions. This is important for instance for free-viewpoint television or personalized views on video content. The optional embodiments described above present a generic solution, which is not restricted to a specific type of interaction (e.g. setting the camera position), but which can be used for all sorts of user feedback. A benefit is that a user wouldn't use interactive applications if they weren't responsive.

Also in some live-streaming cases, zero-latency is crucial, even life-saving, such as remote-controlled automated devices (drones, robotics, medical surgery, etc.). The optional embodiments can eliminate latency from the producer's side as well, by splitting the bulky model data from the light-weight rendering parameters. Even if the latter can't be predicted, latency can be eliminated by sending them through a high-priority channel. That part doesn't require much bandwidth, so the solution is scalable, if many users would require high-priority.

Current solutions solving zero-latency interactivity don't offer the same flexibility. User interaction is limited to viewport cropping or restricted camera motion with small disparities. Methods based on having geometry-aware parametric representations like rigged meshes are at this point only feasible for games, not for general content. The above described optional embodiments add flexibility.

For the live-streaming case, there are no current representations that split big model data and light parameter data. So they always require high-priority for the full video representation packets, which is not scalable.

Moreover, traditional codecs don't offer a representation that enables prediction in the future. I.e. knowing the frames that have already been received, it is impossible to use the representation to extrapolate the new frame, let alone several frames ahead. Appearance models do offer that kind of prediction, which may bridge latency gaps.

A person of skill in the art would readily recognize that steps of various above-described methods can be performed by programmed computers. Herein, some embodiments are also intended to cover program storage devices, e.g. digital data storage media, which are machine or computer readable and encode machine-executable or computer-executable programs of instructions, wherein said instructions perform some or all of the steps of said above-described methods. The program storage devices may be, e.g. digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

**Claims**

1. A method for incremental manifold learning, comprising:

   - incrementally obtaining a plurality of appearance samples;
   - for each incrementally obtained appearance sample, determining an initial embedding in a manifold, said embedding being a lower-dimensional representation of said incrementally obtained appearance sample;
   - for each last incrementally obtained appearance sample, selecting a proper subset from said incrementally obtained appearance samples, said proper subset comprising at least said last appearance sample and its predecessor appearance sample;
   - computing for that proper subset a transport operator relation between said last appearance sample and its predecessor appearance sample and zero or more auxiliary transport operator relations between respective pairs of appearance samples of said proper subset;
   - iteratively updating said manifold based on said computed transport operator relations.

2. The method of claim 1, comprising:

   - iteratively determining whether or not to generate at least one new neighbourhood of said manifold, depending on modelling consistency requirements, wherein each neighbourhood defines a consistently modelled sub-region of said manifold; and
   - determining a number of memberships for each incrementally obtained appearance sample, by allocating said appearance sample as an embedding to a number of neighbourhoods of said manifold; and

   wherein said iterative updating of said manifold is performed on a per-neighbourhood basis by:

   - estimating local behaviour in a neighbourhood of said manifold based on transport operator relations between appearance samples allocated to said neighbourhood; and
   - aligning said embeddings in said neighbourhood based on said estimated local behaviour.

3. The method of claim 2, wherein said updating is performed asynchronously from said incremental obtaining.

4. The method of any one of the previous claims,

- wherein each neighbourhood comprises a group of consecutive appearance samples;
- wherein computing a transport operator relation comprises propagating a set of video particles over consecutive appearance samples of said neighbourhood;
- wherein at least one appearance sample of each neighbourhood is a member of a plurality of neighbourhoods;
- wherein estimating local behaviour in a neighbourhood is preferably based on a pre-computed kernel matrix containing correlations based on said set of video particles for said neighbourhood; and
- wherein said zero or more auxiliary transport operator relations are computed between respective pairs of appearance samples associated with embeddings in order to reduce drift over one or more neighbourhoods of said manifold; and

said method optionally comprising:
- storing an index of computed auxiliary transport operator relations in order to prevent re-computation thereof.

5. The method of claim 4, comprising:

- detecting for a neighbourhood whether or not an occlusion has occurred; and
- closing said neighbourhood for further allocating based on said detecting.

6. The method of any one of the claims 4-5, comprising, after updating a neighbourhood of said manifold:

- determining a probabilistic framework configured for correcting said aligned embeddings based on an aggregating probability matrix based on said pre-computed kernel matrix; and
- correcting said aligned embeddings based on said information filter; and
said method optionally comprising, after said correcting:
- regularizing said iteratively updated manifold neighbourhood by normalizing and orthogonalizing its eigenvectors.

7. The method of any one of the claims 2-3, wherein updating a manifold on a per-neighbourhood basis comprises:

- modelling said manifold by determining a number of derivatives for each respective neighbourhood based on appearance sample members of said respective neighbourhood and their computed operator transport relations, in order to provide a first information filter for aggregating partial information about said number of derivatives of said respective neighbourhood, said partial information being provided by said computed operator transport relations; said method comprising updating said manifold on a per-sample basis by:
- embedding new appearance samples in said manifold by determining new embeddings based on said number of derivatives and said transport operator relations, in order to provide a second information filter for aggregating partial information about said embeddings, said partial information being provided by the neighbourhoods of which said sample is a member.

8. The method of claim 7,
wherein computing said transport operator relation comprises computing a first flow map from a first appearance sample to a second appearance sample, said first flow being registered to said first appearance sample's framework; and
wherein said updating of said manifold neighbourhood comprises:

- warping said first flow map to a third appearance sample's framework, based on a second flow map from said first appearance sample to said third appearance sample, wherein said second flow map is estimated based on one or more derivatives previously determined for the neighbourhood of said third appearance sample; and

said method optionally comprising, after said updating:

- regularizing said iteratively updated manifold neighbourhood by orthogonalizing its derivatives.

9. The method of any one of the claims 7-8,
wherein computing said zero or more auxiliary transport operator relations comprises:

- calculating a Euclidean distance between said respective pairs of appearance samples of said proper subset in said manifold space;
- calculating a shortest path over the graph of said appearance samples;

- comparing said Euclidean distance and said shortest path;
- based on said comparing, determining a number of pairs of appearance samples of said proper subset; and
- computing for said determined number of pairs of appearance samples zero or more auxiliary transport operator relations; and/or

wherein said number of memberships is determined based on respective distances in said manifold space between said embedding and said neighbourhood's centre, after each iteration of said updating of said manifold neighbourhood; and/or

said method comprising determining whether or not to generate and/or terminate a number of neighbourhoods based on the respective distances between extant neighbourhoods of said manifold, and on respective distances between pairs of embeddings in said extant neighbourhoods.

10. The method of any one of the previous claims, comprising:

- interpolating an appearance sample based on a reduced version of said manifold;
- obtaining user input in a visual domain based on said interpolated appearance sample;
- translating said user input to said manifold space;
- predicting a required manifold point based on said translated user input and on a pre-determined story script defining a trace through said manifold space;
- estimating coverage of said manifold by determining region sizes of interpolation regions for a plurality of embeddings in said manifold space;
- comparing said estimated coverage and said predicted required manifold point;
- based on said comparing, determining a number of appearance samples to be obtained; and
- adding said number of appearance samples to said reduced version of said manifold.

11. A system for incremental manifold learning, comprising:

- a sample input module configured for incrementally obtaining a plurality of appearance samples and for determining, for each incrementally obtained appearance sample, an initial embedding in a manifold, said embedding being a lower-dimensional representation of said incrementally obtained appearance sample;
- a link decision module configured for selecting, for each last incrementally obtained appearance sample, a proper subset from said incrementally obtained appearance samples, said proper subset comprising at least said last appearance sample and its predecessor appearance sample;
- a transport operator module configured for computing for that proper subset a transport operator relation between said last appearance sample and its predecessor appearance sample and zero or more auxiliary transport operator relations between respective pairs of appearance samples of said proper subset; and
- a learning module configured for iteratively updating said manifold based on said computed transport operator relations.

12. The system of claim 11, comprising:

- a neighbourhood generation module configured for iteratively determining for each incrementally obtained appearance sample whether or not to generate at least one new neighbourhood of said manifold, depending on modelling consistency requirements, wherein each neighbourhood defines a consistently modelled sub-region of said manifold; and
- a membership module configured for determining a number of memberships for each incrementally obtained appearance sample, by allocating said appearance sample as an embedding to a number of neighbourhoods of said manifold; and

wherein said learning module is configured for iteratively updating said manifold on a per-neighbourhood basis by:

- estimating local behaviour in a neighbourhood of said manifold based on transport operator relations between appearance samples allocated to said neighbourhood; and
- aligning said embeddings in said neighbourhood based on said estimated local behaviour.

13. The system of claim 12,

- wherein said neighbourhood generation module is configured for generating each neighbourhood such that it comprises a group of consecutive appearance samples;
- wherein said transport operator module is configured for propagating a set of video particles over consecutive appearance samples of said neighbourhood; for computing said zero or more auxiliary transport operator relations in order to reduce drift over one or more neighbourhoods of said manifold; and optionally for storing an index of computed auxiliary transport operator relations in order to prevent re-computation thereof;
- wherein said learning module is preferably configured for estimating local behaviour in a neighbourhood based on a pre-computed kernel matrix containing correlations based on said set of video particles for said neighbourhood; and
- wherein said membership module is configured for allocating at least one appearance sample of each neighbourhood as a member of a plurality of neighbourhoods.

14. The system of claim 12, wherein said learning module is configured for updating a manifold on a per-neighbourhood basis by:

- modelling said manifold by determining a number of derivatives for each respective neighbourhood based on appearance sample members of said respective neighbourhood and their computed operator transport relations, in order to provide a first information filter for aggregating partial information about said number of derivatives of said respective neighbourhood, said partial information being provided by said computed operator transport relations; and wherein said learning module is configured for updating said manifold on a per-sample basis by:
- embedding new appearance samples in said manifold by determining new embeddings based on said number of derivatives and said transport operator relations, in order to provide a second information filter for aggregating partial information about said embeddings, said partial information being provided by the neighbourhoods of which said sample is a member.

15. A computer program product comprising computer-executable instructions for performing a method when the program is run on a computer, the method comprising the steps of any one of the methods of any one of the claims 1-10.

FIG. 1

FIG. 2

FIG. 3

EP 3 048 563 A1

FIG. 4

FIG. 5

EP 3 048 563 A1

FIG. 6

**FIG. 7**

FIG. 8

FIG. 9

FIG. 10

FIG. 11

Europäisches
Patentamt

European
Patent Office

Office européen
des brevets

# EUROPEAN SEARCH REPORT

Application Number

EP 15 30 5063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIANG LIU ET AL: "Online Appearance Model Learning for Video-Based Face Recognition", 2007 IEEE CONFERENCE ON COMPUTER VISION AND PATTERN RECOGNITION, 1 June 2007 (2007-06-01), pages 1-7, XP055205386, DOI: 10.1109/CVPR.2007.383377 ISBN: 978-1-42-441180-1 * abstract * * Introduction, right column, 3rd paragraph, 2nd sentence * * Sections 3.1 and 3.2 * | 1-15 | INV. G06K9/62 |
| T | SALTI S ET AL: "Adaptive Appearance Modeling for Video Tracking: Survey and Evaluation", IEEE TRANSACTIONS ON IMAGE PROCESSING, IEEE SERVICE CENTER, PISCATAWAY, NJ, US, vol. 21, no. 10, 1 October 2012 (2012-10-01), pages 4334-4348, XP011492183, ISSN: 1057-7149, DOI: 10.1109/TIP.2012.2206035 * figure 1 * * Section III.A 3rd sentence; page 4335 * * Section III.C, 2nd paragraph; page 4337 * | | |
| | | | TECHNICAL FIELDS SEARCHED (IPC) |
| | | | G06K |

-/--

The present search report has been drawn up for all claims

| Place of search | Date of completion of the search | Examiner |
|---|---|---|
| The Hague | 30 July 2015 | Rajadell Rojas, Olga |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 15 30 5063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KUANG-CHIH LEE ET AL: "Online Learning of Probabilistic Appearance Manifolds for Video-Based Recognition and Tracking", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, vol. 1, 20 June 2005 (2005-06-20), pages 852-859, XP010817361, DOI: 10.1109/CVPR.2005.260 ISBN: 978-0-7695-2372-9 * Introduction * * Section 3, 1st paragraph * * Section 3.2, 1st paragraph * * Section 3.3, 1st paragraph * ----- | 1-15 | |
| A | ARTAC M ET AL: "Incremental PCA for on-line visual learning and recognition", PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 3, 11 August 2002 (2002-08-11), pages 781-784, XP010613740, DOI: 10.1109/ICPR.2002.1048133 ISBN: 978-0-7695-1695-0 * Introduction * * Section 2.1 * ----- | 1-15 | TECHNICAL FIELDS SEARCHED (IPC) |

-/--

The present search report has been drawn up for all claims

| Place of search | Date of completion of the search | Examiner |
|---|---|---|
| The Hague | 30 July 2015 | Rajadell Rojas, Olga |

EPO FORM 1503 03.82 (P04C01)

**Europäisches Patentamt**
**European Patent Office**
**Office européen des brevets**

# EUROPEAN SEARCH REPORT

Application Number

EP 15 30 5063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROSS DAVID A ET AL: "Incremental learning for robust visual tracking", INTERNATIONAL JOURNAL OF COMPUTER VISION, KLUWER ACADEMIC PUBLISHERS, NORWELL, US, vol. 77, no. 1-3, 1 May 2008 (2008-05-01), pages 125-141, XP008091841, ISSN: 0920-5691, DOI: 10.1007/S11263-007-0075-7 [retrieved on 2007-08-17] * Sections 1-3 * | 1-15 | |

TECHNICAL FIELDS
SEARCHED (IPC)

The present search report has been drawn up for all claims

| Place of search | Date of completion of the search | Examiner |
|---|---|---|
| The Hague | 30 July 2015 | Rajadell Rojas, Olga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)